# FASCICULE DE BREVET EUROPEEN

(11) **EP 2 732 513 B1**
(45) Date de publication et mention de la délivrance du brevet: **02.05.2018**
(21) Numéro de dépôt: 12744083.2
(22) Date de dépôt: 11.07.2012
(51) Int. Cl.: H01S 3/23, H01S 3/00, H01S 3/067, H01S 3/10

(54) **DISPOSITIF ET PROCEDE PASSIF DE COMBINAISON COHERENTE DE DEUX FAISCEAUX OPTIQUES AMPLIFIES ET/OU ELARGIS SPECTRALEMENT**
VORRICHTUNG UND PASSIVES VERFAHREN ZUR KOHÄRENTEN VEREINIGUNG VON ZWEI VERSTÄRKTEN UND/ODER SPEKTRAL VERBREITERTEN OPTISCHEN STRAHLENBÜNDELN
DEVICE AND PASSIVE METHOD FOR COHERENTLY COMBINING TWO AMPLIFIED AND/OR SPECTRALLY BROADENED OPTICAL BEAMS

(30) Priorité: 11.07.2011 FR 1156292
(43) Date de publication de la demande: 21.05.2014
(73) Titulaire: Ecole Polytechnique, 91120 Palaiseau (FR); Amplitude Systemes, 33600 Pessac (FR)
(72) Inventeur: PAPADOPOULOS, Dimitris, F-75013 Paris (FR); HANNA, Marc, F-91470 Limours (FR); DANIAULT, Louis, F-92130 Issy les Moulineaux (FR); ZAOUTER, Yoann, F-75004 Paris (FR); DRUON, Frédéric, F-91400 Orsay (FR)
(74) Mandataire: Jacobacci Coralis Harle
(86) Numéro de dépôt international: PCT/FR2012/051644
(87) Numéro de publication internationale: WO 2013/007954

(56) Documents cités:
- EP-A2- 2 302 746
- WO-A1-2009/132375
- DE-A1- 10 243 367
- US-A- 3 530 388
- US-A1- 2004 190 119
- DANIAULT L ET AL: "Coherent beam combining of two femtosecond fiber chirped-pulse amplifiers", OPTICS LETTERS, OSA, OPTICAL SOCIETY OF AMERICA, WASHINGTON, DC, US, vol. 36, no. 5, 1 mars 2011 (2011-03-01), pages 621-623, XP001560608, ISSN: 0146-9592, DOI: 10.1364/OL.36.000621 [extrait le 2011-02-18] cité dans la demande
- LOUIS DANIAULT ET AL: "Passive coherent beam combining of two femtosecond fiber chirped-pulse amplifiers", OPTICS LETTERS, OSA, OPTICAL SOCIETY OF AMERICA, WASHINGTON, DC, US, vol. 36, no. 20, 15 octobre 2011 (2011-10-15), pages 4023-4025, XP001570552, ISSN: 0146-9592, DOI: 10.1364/OL.36.004023 [extrait le 2011-10-07]
- ROCKWELL D A ET AL: "COHERENT COUPLING OF LASER GAIN MEDIA USING PHASE CONJUGATION", OPTICS LETTERS, OSA, OPTICAL SOCIETY OF AMERICA, WASHINGTON, DC, US, vol. 11, no. 3, 1 mars 1986 (1986-03-01), pages 147-149, XP000710377, ISSN: 0146-9592

## Description

La présente invention concerne un dispositif et un procédé de combinaison cohérente de deux faisceaux optiques transformés par des composants optiques limités en énergie et/.ou en puissance moyenne et/ou en puissance crête. Tout particulièrement, l'invention concerne un dispositif et un procédé de combinaison cohérente de deux faisceaux optiques amplifiés, par exemple par deux amplificateurs optiques indépendants. L'invention concerne aussi un dispositif et un procédé de combinaison cohérente de deux faisceaux optiques élargis spectralement par deux élargisseurs spectraux indépendants. L'invention concerne aussi un dispositif et un procédé de combinaison cohérente de deux faisceaux optiques amplifiés et élargis spectralement par exemple par deux amplificateurs optiques non-linéaire.

On cherche à développer des faisceaux optiques et notamment des faisceaux lasers d'énergie, de puissance crête et/ou de puissance moyenne de plus en plus élevée tout en présentant un faisceau optique d'excellente qualité spatiale. On cherche également à développer des dispositifs de volume réduit basés sur l'utilisation de composants optiques intégrés, tels que un amplificateur à fibre optique, ou encore un élargisseur de spectre basé sur une fibre à capillaire creux, ou encore sur une fibre à large coeur (LMA ou large mode area) ou encore sur des fibres à petits coeurs possédant des propriétés dispersives particulières. Toutefois, ces composants optiques sont limités en énergie et/ou en puissance moyenne et/ou en puissance crête. Différents dispositifs ont été proposés pour répartir l'énergie d'un faisceau entre plusieurs composants optiques indépendants, chaque composant optique étant limité en énergie et/ou en puissance moyenne et/ou en puissance crête. La difficulté est ensuite de recombiner les différents faisceaux de manière cohérente de manière à préserver leurs qualités spatiale, spectrale, temporelle, tout en augmentant leurs énergie, puissance moyenne, puissance crête. Dans le cas de l'amplification optique, une première technique pour obtenir un faisceau optique de forte énergie consiste à amplifier un faisceau par deux étages successifs d'amplification. En partant d'un oscillateur générant des impulsions initiales dans le domaine de 10 pJ à 1 µJ, un préamplificateur permet d'obtenir des impulsions à des énergies intermédiaires de 10nJ à quelques µJ. Un second amplificateur optique de puissance est nécessaire pour atteindre les énergies de 10 µJ à quelques mJ requises pour la plupart des applications. Cependant, l'amplification optique dans un milieu optique non linéaire est susceptible d'engendrer des effets non linéaires (auto-modulation de phase ...) responsables d'une détérioration de la qualité optique du faisceau amplifié et plus précisément des propriétés temporelles (impulsion ultra-courte) et/ou spectrales du faisceau optique. L'amplification à forte puissance moyenne peut par ailleurs dégrader les propriétés spatiales du faisceau (faisceau monomode) du fait d'effets thermo-optiques.

Une autre manière d'obtenir un faisceau de forte énergie et/ou de forte puissance et/ou forte puissance crête est d'utiliser plusieurs sources ou plusieurs amplificateurs indépendants et de combiner les faisceaux provenant de ces différentes sources ou de ces différents amplificateurs. Toutefois, afin de conserver toutes les qualités du faisceau laser, la recombinaison des différents faisceaux doit non seulement permettre leur superposition spatiale et temporelle, mais aussi une recombinaison cohérente, c'est-à-dire avec une différence de phase stable dans le temps. La combinaison cohérente de faisceaux lasers amplifiés est une technique très prometteuse pour mettre au point des systèmes lasers de forte énergie et/ou de forte puissance moyenne et/ou de forte puissance crête. Cependant, les phases relatives de différents faisceaux peuvent fluctuer rapidement. Le problème technique le plus difficile que pose la recombinaison cohérente est de maintenir une phase relative constante entre différents faisceaux optiques.

La recombinaison cohérente de plusieurs faisceaux optiques a néanmoins été réalisée au moyen de dispositifs soit passifs soit actifs.

La publication « Laser beam combining for High-Power, high-radiance sources » de T.Y.Fan, IEEE Journal of selected topics in Quantum Electronics, vol. 11, n°3, 2005 indique les conditions fondamentales requises pour effectuer une combinaison de faisceaux lasers (contrôle de la puissance, phase relative, polarisation, amplitude et alignement de chaque faisceau à combiner) et décrit différentes méthodes de combinaison cohérente de faisceaux optiques dans le but d'obtenir un faisceau de forte puissance moyenne et présentant des qualités spatiale, temporelle, spectrale et de polarisation quasi-idéales.

Le document de brevet US 5307369 (D.E. Kimberlin) décrit un système passif de combinaison cohérente de deux amplificateurs placés à l'intérieur d'une cavité résonante commune divisée en deux sous cavités par un miroir semi-réfléchissant. Ce dispositif s'apparente à un oscillateur à double contre réaction-optique, une partie du faisceau émis par le premier amplificateur laser étant injectée dans la sous-cavité du second amplificateur laser et vice versa. Le faisceau laser combiné de sortie résulte des réflexions cohérentes multiples se produisant dans la cavité laser. Ce dispositif permet de doubler la puissance moyenne d'un faisceau laser continu ou d'impulsions laser synchronisées émises par les deux lasers. Toutefois, les différences de chemins optiques entre les deux sous cavités induisent des déphasages qui limitent la stabilité du dispositif passif et la puissance de sortie.

La combinaison passive apparaissant limitée, différents dispositifs actifs de recombinaison cohérente de faisceaux optiques ont été proposés. La recombinaison active repose sur une mesure directe ou indirecte de la phase relative entre les faisceaux optiques à combiner et sur l'introduction d'un déphasage contrôlé activement par une boucle de contre-réaction sur chaque faisceau optique. Un dispositif actif de recombinaison cohérente prélève généralement une partie du faisceau avant ou après recombinaison pour en extraire une mesure du déphasage entre les faisceaux optiques et adapte en temps réel la phase relative sur chaque faisceau au moyen d'un modulateur acousto-optique, d'un miroir piezo-électrique, ou par l'ajustement de la puissance de pompage optique.

Ainsi, pour les amplificateurs, un dispositif actif de combinaison cohérente est généralement utilisé [Wei Liang, Naresh Satyan, Firooz Aflatouni, Amnon Yariv, Anthony Kewitsch, George Rakuljic, and Hossein Hashemi, "Coherent beam combining with multilevel optical phase-locked loops," J. Opt. Soc. Am. B 24, 2930-2939 (2007) ; T. Shay, V. Benham, J. T. Baker, A. D. Sanchez, D. Pilkington, and C. A. Lu, IEEE J. Sel. Top. Quantum Electron. 13, 480 (2007)]. La combinaison cohérente a été démontrée en régime continu et quasi continu, et récemment en régime femtoseconde [cf les publications L. Daniault, M. Hanna, L. Lombard, Y. Zaouter, E. Mottay, D. Goular, P. Bourdon, F. Druon, and P. Georges, "Coherent beam combining of two femtosecond fiber chirped-pulse amplifiers," Opt. Lett. 36, 621-623 (2011) et Enrico Seise, Arno Klenke, Jens Limpert, and Andreas Tünnermann, "Coherent addition of fiber-amplified ultrashort laser pulses," Opt. Express 18, 27827-27835 (2010).

Toutefois, les dispositifs actifs de recombinaison cohérente sont compliqués car ils nécessitent un système électronique d'asservissement temps réel difficile à mettre en oeuvre et coûteux.

La montée en puissance des dispositifs actifs de recombinaison cohérente vers des énergies et/ou puissances moyennes plus élevées reste donc problématique.

US 3 530 388 A ou WO 2009/132375 A1 divulgue un dispositif passif de combinaison cohérente de deux faisceaux optiques amplifiés, ledit dispositif comprenant un interféromètre à division d'amplitude en anneau, ledit interféromètre comprenant des moyens optiques de séparation et de recombinaison disposés de manière à recevoir un faisceau optique incident et à le séparer spatialement en un premier faisceau secondaire d'entrée et un second faisceau secondaire d'entrée, des moyens optiques de guidage disposés de manière à définir un trajet optique en anneau dans ledit interféromètre, ledit premier faisceau secondaire d'entrée parcourant l'interféromètre en anneau suivant une direction horaire pour former un premier faisceau secondaire de sortie et respectivement ledit second faisceau secondaire d'entrée parcourant l'interféromètre en anneau suivant une direction anti- horaire pour former un second faisceau secondaire de sortie; au moins un composant optique bidirectionnel disposé sur le trajet optique dudit interféromètre en anneau, ledit au moins un composant optique bidirectionnel étant apte à amplifier d'une part un faisceau optique secondaire se propageant suivant une direction horaire et d'autre part un faisceau optique secondaire se propageant suivant une direction antihoraire; lesdits moyens de séparation et de recombinaison étant disposés de manière à recevoir et à recombiner spatialement, temporellement et de manière cohérente ledit premier faisceau secondaire de sortie et ledit second faisceau secondaire de sortie pour former un faisceau cohérent de sortie amplifié. Un des buts de l'invention est de proposer un dispositif de combinaison cohérente de deux faisceaux optiques amplifiés et/ou élargis spectralement qui soit stable dans le temps et capable de supporter et de générer des énergies et/ou puissances et/ou des puissances crêtes élevées.

Un autre but de l'invention est de proposer un dispositif et un procédé pouvant s'appliquer à tout régime temporel, du continu aux impulsions femtoseconde, à tout type d'amplificateur optique ou à tout type d'élargisseur spectral, l'amplification pouvant le cas échéant induire simultanément un élargissement spectral.

La présente invention a pour but de remédier aux inconvénients des techniques antérieures et concerne plus particulièrement un dispositif passif de combinaison cohérente de deux faisceaux optiques amplifiés et/ou élargis selon la revendication 1. Selon différents modes de réalisation particuliers de l'invention, le dispositif comprend en outre :
- des moyens d'isolation optique disposés en amont dudit interféromètre en anneau de manière à séparer spatialement le faisceau optique incident et le faisceau cohérent de sortie amplifié et/ou élargi spectralement deux fois ;
- lesdits moyens optiques de guidage comprennent des miroirs fortement réfléchissants, des miroirs à dérive de fréquence, des sections de fibres optiques, et/ou des sections de fibres optiques à maintien de polarisation et/ou des sections de fibres optiques à dispersion spécifique ;
- lesdits moyens optiques de séparation et de recombinaison comprennent un séparateur de polarisation disposé de manière à séparer le faisceau incident en un premier faisceau secondaire d'entrée et un second faisceau secondaire d'entrée, lesdits premier et second faisceaux secondaires d'entrée étant polarisés linéairement suivant des polarisations orthogonales, ledit dispositif comprenant en outre des moyens de polarisation disposés sur le trajet de l'interféromètre en anneau, lesdits moyens de polarisation étant configurés de manière à ce que le premier faisceau secondaire de sortie soit polarisé linéairement suivant une même polarisation que le second faisceau secondaire d'entrée et de manière à ce que ledit second faisceau secondaire de sortie soit polarisé linéairement suivant une même polarisation que le premier faisceau secondaire d'entrée ;
- lesdits moyens de polarisation comprennent une lame demi-onde, ou deux lames quart d'onde, une lame demi-onde ou deux lames demi-onde, ou un rotateur de Faraday ou un miroir de Faraday, ou un sous-ensemble comprenant un cube séparateur de polarisation, une lame quart d'onde et un miroir réfléchissant ;
- lesdits moyens optiques de séparation et de recombinaison comprennent un polariseur et/ou une lame d'onde et ou un isolateur optique configuré(s) de manière à recombiner sur un même état de polarisation ledit premier faisceau secondaire de sortie amplifié et/ou élargie spectralement deux fois et ledit second faisceau secondaire de sortie amplifié et/ou élargie spectralement deux fois polarisés orthogonalement l'un par rapport à l'autre ;
- ledit au moins un composant optique bidirectionnel comprend un amplificateur optique à pompage co-propagatif et/ou à pompage contra-propagatif ;
- ledit au moins un composant optique bidirectionnel comprend un premier amplificateur optique bidirectionnel et un second amplificateur optique bidirectionnel, lesdits amplificateurs optiques étant disposés en série sur le trajet optique de l'interféromètre en anneau ;
- le premier amplificateur optique comprend un premier amplificateur à fibre optique et ledit second amplificateur optique comprend un second amplificateur à fibre optique ;
- ledit au moins un composant optique bidirectionnel comprend un premier composant optique bidirectionnel apte à élargir spectralement lesdits faisceaux optiques secondaires et un second composant optique bidirectionnel apte à élargir spectralement lesdits faisceaux optiques secondaires.
L'invention concerne aussi un procédé de combinaison cohérente passive de deux faisceaux optiques amplifiés et/ou élargis spectralement, selon la revendication 11. Selon un mode de réalisation préféré, le procédé de combinaison cohérente comprend:
- la séparation spatiale en amplitude du faisceau optique incident en un premier faisceau secondaire d'entrée et un second faisceau secondaire d'entrée comprend une séparation en polarisation, lesdits premier faisceau secondaire d'entrée et second faisceau secondaire d'entrée étant polarisés orthogonalement,
- le guidage optique dans l'interféromètre en anneau comprend une rotation de polarisation à 90 degrés, ledit premier faisceau secondaire de sortie ayant la même polarisation que le second faisceau secondaire d'entrée et le second faisceau secondaire de sortie ayant la même polarisation que le premier faisceau secondaire d'entrée,
- la recombinaison spatiale cohérente comprend une recombinaison du premier faisceau secondaire de sortie amplifié et/ou élargi spectralement deux fois et du second faisceau secondaire de sortie amplifié et/ou élargi spectralement deux fois, les polarisations du premier faisceau secondaire de sortie amplifié et/ou élargi spectralement deux fois et du second faisceau secondaire de sortie amplifié et/ou élargi spectralement deux fois étant orthogonales.
L'invention trouvera une application particulièrement avantageuse dans la fabrication de sources laser de haute énergie et/ou puissance et/ou de forte puissance crête de bonne qualité optique de faisceau.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :
- la figure 1 représente schématiquement un dispositif passif de combinaison cohérente de deux faisceaux optiques amplifiés non conforme à l'invention suivant un premier mode de réalisation ;
- la figure 2 représente schématiquement un dispositif passif de combinaison cohérente de deux faisceaux optiques amplifiés non conforme à l'invention suivant une première variante d'un second mode de réalisation ;
- la figure 3 représente schématiquement un dispositif passif de combinaison cohérente de deux faisceaux optiques amplifiés non conforme à l'invention suivant une deuxième variante du second mode de réalisation ;
- la figure 4 représente schématiquement un dispositif de combinaison cohérente de deux faisceaux optiques amplifiés non conforme à l'invention suivant une troisième variante du second mode de réalisation ;
- la figure 5 représente schématiquement un dispositif de combinaison cohérente de deux faisceaux optiques amplifiés suivant une quatrième variante selon l'invention du second mode de réalisation pour une composante de polarisation d'entrée ;
- la figure 6 représente le même dispositif que la figure 5 pour l'autre composante de polarisation d'entrée ;
- la figure 7 représente schématiquement un dispositif de combinaison cohérente de deux faisceaux optiques amplifiés suivant une cinquième variante selon l'invention du second mode de réalisation pour une composante de polarisation d'entrée ;
- la figure 8 représente le même dispositif que la figure 7 pour l'autre composante de polarisation d'entrée ;
- la figure 9 représente schématiquement un dispositif passif de combinaison cohérente de deux faisceaux optiques amplifiés non conforme à l'invention suivant un troisième mode de réalisation ;
- la figure 10 représente schématiquement un dispositif de combinaison cohérente de deux faisceaux optiques amplifiés non conforme à l'invention suivant une cinquième variante du second mode de réalisation ;
- la figure 11 une mesure d'auto corrélation pour des impulsions femtoseconde amplifiées respectivement pour une puissance totale de 20 W à 35 MHz et de 10 W à 1 MHz;
- la figure 12 représente une mesure de spectre optique pour des impulsions femtoseconde amplifiées respectivement pour une puissance totale de 20 W à 35 MHz (bleu) et 10 W à 1 MHz (rouge) ;
- la figure 13 représente une mesure d'efficacité de combinaison cohérente d'impulsions amplifiées en fonction de l'énergie d'impulsion pour une fréquence de répétition de 1 MHz et de 35 MHz ;
- la figure 14 représente une mesure d'auto corrélation pour une architecture classique à deux étages d'amplification et pour une architecture de combinaison cohérente de deux amplificateurs selon l'invention ;
- les figures 15A-15C représentent des images de profils de faisceaux et de mesure de qualité de faisceau respectivement pour un premier faisceau amplifié seul (9A), un second faisceau amplifié seul (9B) et pour un faisceau combiné (9C) ;
- la figure 16 représente schématiquement un dispositif passif de combinaison cohérente de deux faisceaux optiques élargis spectralement non conforme à l'invention suivant une première variante du troisième mode de réalisation ;
- la figure 17 représente schématiquement un dispositif passif de combinaison cohérente de deux faisceaux optiques élargis spectralement non conforme à l'invention suivant une deuxième variante du troisième mode de réalisation ;
- la figure 18 représente schématiquement un dispositif de combinaison cohérente de deux faisceaux optiques élargis spectralement non conforme à l'invention suivant une troisième variante du troisième mode de réalisation.
Nous décrivons en lien avec les figures 1 à 15 une première application de l'invention à un dispositif et un procédé de combinaison cohérente de deux amplificateurs optiques, chaque amplificateur optique étant limité en puissance moyenne et/ou en puissance crête et/ou en énergie.

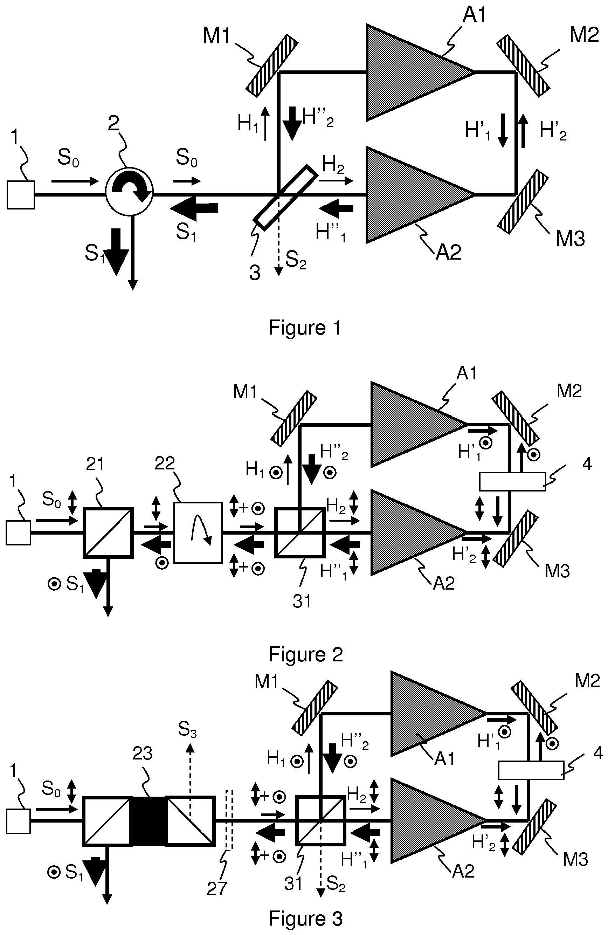

Un dispositif passif de recombinaison cohérente selon un premier mode de réalisation est présenté en figure 1. Le principe de fonctionnement repose sur l'utilisation d'un interféromètre en anneau, par exemple un interféromètre de Sagnac, dans lequel la réciprocité des chemins optiques opposés est mise à profit.

Un interféromètre de Sagnac est généralement utilisé pour mesurer l'effet Sagnac afin d'en déduire une mesure de rotation. Par construction, les ondes optiques se propageant dans un interféromètre de Sagnac suivant une direction respectivement horaire et antihoraire, parcourent des chemins optiques parfaitement réciproques. Un interféromètre de Sagnac utilise des composants optiques en espace libre ou à fibre optique pour former une boucle optique suffisamment longue pour être sensible à l'effet Sagnac dont l'amplitude est très faible. Dans un gyromètre à fibre optique la longueur de la boucle optique est généralement comprise entre plusieurs centaines de mètres et plusieurs kilomètres.

La figure 1 représente schématiquement un dispositif passif de combinaison cohérente de deux faisceaux amplifiés selon un premier mode de réalisation. Une source 1 génère un faisceau lumineux incident S₀ que l'on souhaite amplifier. Un circulateur optique 2 adresse le faisceau incident S₀ vers l'entrée d'un interféromètre en anneau. Sur le schéma de la figure 1, on a représenté un interféromètre en espace libre comprenant un ensemble de miroirs fortement réfléchissants M1, M2, M3 qui forment le trajet en anneau de l'interféromètre. Une lame séparatrice 3 sépare spatialement le faisceau incident S₀ en un premier faisceau secondaire d'entrée H₁ et en un second faisceau secondaire d'entrée H₂. De préférence, la lame séparatrice est choisie de manière à ce que les faisceaux secondaires d'entrée H₁ et H₂ aient une puissance égale. Cependant, une séparation inégale des deux faisceaux secondaires peut être mise à profit afin de compenser un éventuel déséquilibre en puissance et/ou en puissance crête et/ou en polarisation et/ou en effets non-linéaires des deux chemins optiques de l'interféromètre. Cette répartition inégale des faisceaux secondaires d'entrée H₁ et H₂ pourra ainsi permettre une meilleure efficacité de combinaison cohérente. Le premier faisceau secondaire d'entrée H₁ est réfléchi par la lame séparatrice 3 et parcourt le trajet optique de l'interféromètre en anneau selon un sens de rotation horaire jusqu'à la lame séparatrice 3 qui transmet le premier faisceau secondaire de sortie (H"₁). De manière réciproque, le second faisceau secondaire d'entrée H₂ entre dans l'interféromètre en anneau par transmission à travers la lame séparatrice 3, parcourt le trajet optique de l'interféromètre en anneau selon un sens de rotation antihoraire jusque la lame séparatrice 3 qui réfléchit le second faisceau secondaire de sortie (H"₂).

Un premier amplificateur optique A1 et un second amplificateur optique A2 sont disposés en série sur le trajet optique de l'interféromètre en anneau. Les deux amplificateurs optiques A1, A2 sont des amplificateurs optiques bi-directionnels, c'est-à-dire qu'ils sont aptes à amplifier un faisceau optique se propageant suivant deux directions respectivement opposées. Chaque amplificateur optique A1, A2 est muni de ses propres moyens de pompage optique (non représentés). De préférence, les deux amplificateurs optiques A1, A2 sont semblables (même gain, même bande passante...) et disposés symétriquement sur le trajet optique de l'interféromètre en anneau. Toutefois, il n'est pas nécessaire que les deux amplificateurs optiques A1, A2 soient strictement identiques. Le premier faisceau secondaire d'entrée H₁ passe donc d'abord par le premier amplificateur A1 puis par le second amplificateur A2. Le premier faisceau secondaire H₁ est ainsi amplifié une première fois par le premier amplificateur A1 pour former un faisceau amplifié une fois H'₁, puis le faisceau amplifié une fois H'₁ est lui-même amplifié par le second amplificateur A2 et forme un premier faisceau secondaire amplifié de sortie H"₁ (amplifié deux fois). Réciproquement, le second faisceau secondaire d'entrée H₂ passe d'abord par le second amplificateur A2 puis par le premier amplificateur A1. Le second faisceau secondaire H₂ est ainsi amplifié une première fois par le second amplificateur A2 pour former un faisceau amplifié une fois H'₂, puis le faisceau amplifié une fois H'₂ est lui-même amplifié par le premier amplificateur A1 et forme un second faisceau secondaire amplifié de sortie H"₂ (amplifié deux fois). La lame séparatrice 3 reçoit le premier faisceau secondaire amplifié de sortie H"₁ et le second faisceau secondaire amplifié de sortie H"₂ et les recombine de manière cohérente pour former un faisceau amplifié de sortie S₁. Le circulateur optique 2 sépare spatialement le faisceau amplifié de sortie S₁ du faisceau incident S₀ afin d'éviter d'endommager la source optique.

Le premier faisceau secondaire de sortie H"₁ et le second faisceau secondaire H"₂ de sortie ont parcouru l'interféromètre en anneau suivant des trajets qui sont au premier ordre réciproques. En effet, ces deux faisceaux parcourent l'interféromètre en anneau suivant des trajets optiques qui se superposent spatialement. Les chemins optiques suivant le sens horaire et le sens anti-horaire ayant la même longueur, le premier faisceau secondaire de sortie H"₁ et le second faisceau secondaire de sortie H"₂ se superposent aussi temporellement. Ces deux faisceaux subissent chacun une transmission et une réflexion sur la lame séparatrice 3, un même nombre de réflexions sur les miroirs M1, M2, M3, une amplification par le premier amplificateur optique A1 et une amplification par le second amplificateur optique A2. Par conséquent, le premier faisceau secondaire amplifié de sortie H"₁ et le second faisceau secondaire amplifié de sortie H"₂ ont par construction une phase relative stable au premier ordre. La construction en anneau suivant des trajets optiques réciproques permet ainsi de recombiner de manière cohérente le premier faisceau secondaire amplifié de sortie H"₁ et le second faisceau secondaire amplifié de sortie H"₂. Selon un mode de réalisation préféré, le premier faisceau secondaire amplifié de sortie H"₁ et le second faisceau secondaire amplifié de sortie H"₂ ont des amplitudes égales de telle sorte que le faisceau recombiné en sortie de l'interféromètre ait une intensité maximum. Les moyens de pompage optiques du premier amplificateur A1 et du second amplificateur A2 peuvent être ajustés de manière à assurer une amplification équilibrée des deux amplificateurs A1, A2. Alternativement, si les phases accumulées dans les amplificateurs A1, et A2 diffèrent de π alors la combinaison cohérente s'opère sur la sortie S₂.

La figure 2 représente schématiquement un dispositif passif de combinaison cohérente de deux faisceaux amplifiés selon une première variante d'un second mode de réalisation. les mêmes repères correspondant aux mêmes éléments que ceux détaillés en lien avec la figure 1. Le mode de réalisation illustré sur la figure 2 utilise des états de polarisation pour différencier le trajet suivi par les faisceaux secondaires. Le dispositif de la figure 2 comprend une source optique 1 générant un faisceau incident S₀ qui est ici polarisé linéairement. Sur la figure 2, un faisceau polarisé linéairement suivant une polarisation parallèle au plan de la figure (polarisation p) est symbolisé par une flèche double et un faisceau polarisé perpendiculairement au plan de la figure (polarisation s) est symbolisé par un disque. Le dispositif de la figure 2 comprend aussi un premier cube séparateur de polarisation 21 suivi d'un premier rotateur de polarisation 22, qui est par exemple un rotateur de Faraday, une lame de phase ou une lame quart d'onde. La lame séparatrice 3 est remplacée par un deuxième cube séparateur de polarisation 31 orienté parallèlement au premier cube séparateur de polarisation 21. Le deuxième cube séparateur de polarisation 31 forme l'entrée-sortie de l'interféromètre en anneau. De manière analogue au dispositif de la figure 1, l'interféromètre en anneau comprend un premier amplificateur optique A1 et un second amplificateur optique A2 disposés en série sur le trajet optique réciproque de l'interféromètre. L'interféromètre comporte en outre un second rotateur de polarisation 4 disposé sur le trajet optique de l'interféromètre en anneau, par exemple entre le premier amplificateur A1 et le second amplificateur A2, comme illustré sur la figure 2. L'homme du métier appréciera que le second rotateur de polarisation puisse être disposé à un autre emplacement sur le trajet optique de l'interféromètre en anneau et peut en particulier être intégré au premier amplificateur optique A1 et/ou au second amplificateur optique A2.

A l'entrée du dispositif de la figure 2, le faisceau incident S₀ polarisé linéairement de polarisation p est transmis par le premier cube séparateur de polarisation 21 orienté parallèlement à la polarisation du faisceau incident S₀. Le premier rotateur de polarisation 22 reçoit le faisceau incident S₀ polarisé p et fait tourner l'axe de polarisation du faisceau incident de 45°. Le second cube séparateur de polarisation 32 est disposé de manière à recevoir un faisceau incident polarisé linéairement comprenant une composante de polarisation p et une composante de polarisation s. Le second cube séparateur de polarisation 31 sépare le faisceau incident en deux faisceaux secondaires d'entrée polarisés orthogonalement: un premier faisceau secondaire d'entrée H₁ de polarisation s et un second faisceau secondaire d'entrée H₂ de polarisation p. Le premier faisceau secondaire parcourt l'interféromètre selon le sens horaire à partir d'un premier port du cube séparateur 31 jusqu'à un second port du même cube séparateur 31. Réciproquement, le second faisceau secondaire parcourt l'interféromètre selon le sens anti-horaire à partir du second port du cube séparateur 31 jusqu'au premier port du même cube séparateur 31. Le premier faisceau secondaire d'entrée H₁ de polarisation s est amplifié par le premier amplificateur A1 pour former un faisceau amplifié une fois H'₁ de polarisation s. Le second rotateur de polarisation 4 est par exemple une lame demi-onde. Le second rotateur de polarisation 4 fait tourner la polarisation du faisceau H'₁ de 90 degrés de manière pour former un faisceau de polarisation p dirigé vers le second amplificateur A2. Le second amplificateur A2 amplifie le premier faisceau secondaire amplifié une fois de polarisation p et forme un premier faisceau secondaire amplifié de sortie H"₁ de polarisation p. Réciproquement, le second faisceau secondaire d'entrée H₂ de polarisation p est amplifié par le second amplificateur A2 pour former un second faisceau amplifié une fois H'₂ de polarisation p. Le second rotateur de polarisation 4 fait tourner la polarisation du faisceau H'₂ de 90 degrés de manière à former un faisceau de polarisation s dirigé vers le premier amplificateur A1. Le premier amplificateur A1 amplifie le second faisceau secondaire amplifié une fois de polarisation s et forme un second faisceau secondaire amplifié de sortie H"₂ de polarisation s. Le cube séparateur de polarisation 31 reçoit le premier faisceau secondaire amplifié de sortie H"₁ de polarisation p sur le second port et le second faisceau secondaire amplifié de sortie H"₂ de polarisation s sur le premier port et les recombine de manière cohérente pour former un faisceau amplifié de sortie S₁ polarisé linéairement à 45 degrés, c'est-à-dire comprenant une composante de polarisation p et une composante de polarisation s de même amplitude. Le premier rotateur de polarisation 22 fait tourner l'axe de polarisation du faisceau cohérent amplifié de 45° de manière à former un faisceau amplifié de sortie S₁ de polarisation s. Le premier cube séparateur de polarisation 21 réfléchit le faisceau amplifié S₁ de polarisation s de manière à le séparer du faisceau incident S₀ de polarisation p. Le dispositif de la figure 2 permet ainsi de recombiner spatialement, temporellement, de manière cohérente et suivant un même état de polarisation les premier et second faisceaux secondaires amplifiés de sortie H"₁ et H"₂.

A l'entrée du dispositif de la figure 2, le faisceau incident S₀ polarisé linéairement de polarisation p. L'homme du métier adaptera aisément le dispositif pour un faisceau incident S₀ polarisé linéairement de polarisation s.

La figure 3 représente schématiquement un dispositif passif de combinaison cohérente de deux faisceaux amplifiés selon une deuxième variante du second mode de réalisation. Le dispositif de la figure 3 utilise aussi des états de polarisation pour différencier le trajet suivi par les faisceaux secondaires horaire et antihoraire respectivement, les mêmes repères correspondant aux mêmes éléments que ceux sur la figure 2. A la place du cube séparateur 21 et du premier rotateur de polarisation 22 on utilise un isolateur de Faraday, composé d'un rotateur de Faraday placé entre deux polariseurs croisés à 45°. Le composant séparateur-combineur de faisceau 31 à l'entrée de la boucle optique est un séparateur de faisceau en amplitude, la recombinaison en polarisation des faisceaux secondaires de sortie s'effectuant sur le premier cube polariseur de l'isolateur de Faraday 23. Le fonctionnement du dispositif de la figure 3 est par ailleurs similaire à celui du dispositif de la figure 2. D'autre part, selon l'orientation de la lame 4, il peut être plus avantageux de récupérer le signal recombiné S₂ sur la deuxième sortie du cube séparateur de polarisation 31. La sortie S₃ sur l'isolateur correspond à une partie complémentaire du signal de sortie qui n'est pas rejeté en S₁ et recombiné en S₂.

De manière optionnelle, le dispositif de la figure 3 peut comprendre une lame de phase 27, par exemple une lame demi-onde, pour ajuster la répartition de puissance entre les deux faisceaux secondaires. L'orientation de la lame 27 peut permettre d'équilibrer à 50%-50% la puissance des deux faisceaux secondaires, ou au contraire permettre d'obtenir une répartition de puissance 45%-55% entre les deux voies, ou encore 30%-70%. En effet, il est parfois difficile d'obtenir une puissance égale sur les deux faisceaux secondaires de sortie, les deux amplificateurs A1 et A2 n'étant pas nécessairement identiques. La lame demi-onde 27 peut permettre de rattraper la dissymétrie de puissance ou d'énergie entre le trajet horaire et le trajet anti-horaire et ainsi d'augmenter l'efficacité de combinaison cohérente.

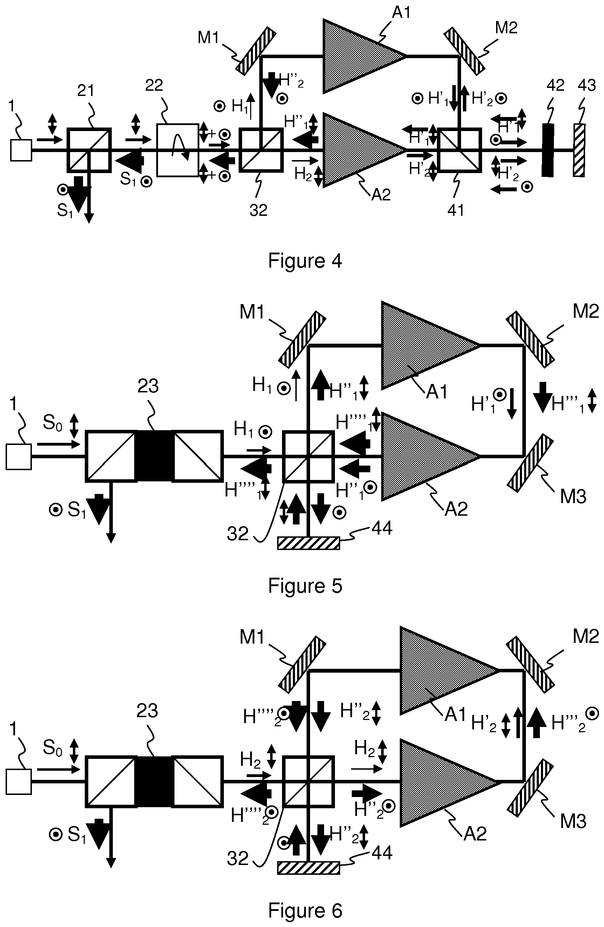

La figure 4 représente schématiquement un dispositif passif de combinaison cohérente de deux faisceaux amplifiés selon une troisième variante du second mode de réalisation. Le dispositif de la figure 4 utilise aussi des états de polarisation pour différencier le trajet suivi par les faisceaux secondaires, les mêmes repères correspondant aux mêmes éléments que ceux sur la figure 2. A la place du rotateur de polarisation 4, le dispositif de la figure 4 comprend un troisième cube séparateur de polarisation 41, une lame quart d'onde 42 ou un rotateur de Faraday et un miroir de renvoi 43. De manière analogue au dispositif de la figure 2, le faisceau incident S₀ est séparé en deux faisceaux secondaires d'entrée H₁, H₂ de même puissance et polarisés orthogonalement. Le premier faisceau secondaire d'entrée H₁ est amplifié le premier amplificateur optique A1 pendant que le second faisceau secondaire d'entrée H₂ est amplifié par le second amplificateur optique A2. En sortie de cette première amplification, les faisceaux amplifiés une fois H'₁ et H'₂ sont recouverts spatialement sur le troisième cube séparateur de polarisation 41. Le premier faisceau secondaire amplifié une fois H'₁ polarisé s est réfléchi tandis que le second faisceau secondaire amplifié une fois H'₂ polarisé p est transmis par le troisième cube séparateur de polarisation 41. Les faisceaux secondaires amplifiés une fois H'₁ et H'₂ suivent donc un chemin commun, sont réfléchis par le miroir 43, et subissent chacun un double passage dans la lame quart d'onde 42. Ce double passage induit une rotation de 90° de l'état de polarisation linéaire de chaque faisceau secondaires H'₁ et H'₂ respectivement. Le premier faisceau secondaire H'₁ polarisé p est ensuite dirigé vers le second amplificateur A2. De même, le second faisceau secondaire H'₂ polarisé s est dirigé vers le premier amplificateur A1. Le premier faisceau secondaire H₁ est ainsi amplifié successivement dans A1 et A2, et vice-versa pour le second faisceau secondaire H₂. Les faisceaux amplifiés de sortie H"₁ et H"₂ sont ensuite recombinés sur le cube séparateur de polarisation 33 avec la même phase, le même délai de groupe, des états de polarisation linéaires orthogonaux, et le même profil spatial. Finalement, le passage dans le rotateur de polarisation 22 et le cube séparateur 21 permet de recombiner les deux composantes de polarisations orthogonales et de séparer le faisceau amplifié cohérent de sortie S₁ polarisé s, du faisceau d'entrée S₀ polarisé p.

Les figures 5 et 6 représentent schématiquement un dispositif passif de combinaison cohérente de deux faisceaux amplifiés selon une quatrième variante selon l'invention du second mode de réalisation de l'invention. La figure 5 représente la propagation de la composante polarisée s du faisceau d'entrée et la figure 6 représente la propagation de la composante polarisée p du faisceau d'entrée, les mêmes repères correspondant aux mêmes éléments que ceux sur la figure 2. A la place du rotateur de polarisation 4, le dispositif de la figure 5 comprend un miroir de Faraday 44 disposé sur une sortie du cube séparateur de polarisation 32. Sur la figure 5, le premier faisceau secondaire d'entrée (H₁) polarisé s parcourt l'interféromètre suivant la direction horaire en étant amplifié une première fois par le premier amplificateur optique A1 puis par le second amplificateur optique A2 sans changer de polarisation. A l'issue d'un tour dans le sens horaire, le faisceau amplifié deux fois H"₁ est réfléchi par le cube séparateur de polarisation 32 en direction du miroir de Faraday 44. Après réflexion sur le miroir de Faraday 44, le faisceau amplifié H"₁ a changé de polarisation, est polarisé p, et est transmis par le cube séparateur de polarisation 32 vers la boucle optique de l'interféromètre, à nouveau dans le sens horaire. Le premier faisceau secondaire est alors amplifié une deuxième fois par le premier amplificateur optique A1 puis par le second amplificateur optique A2 suivant le même chemin mais avec une polarisation perpendiculaire à celle du premier passage. Le premier faisceau secondaire est ainsi amplifié deux fois par le premier amplificateur A1 et deux fois par le second amplificateur A2 pour former un faisceau H""₁ polarisé p sur le cube séparateur 32, où il est transmis en direction de l'isolateur optique 23.

De manière réciproque, comme on peut le voir sur la figure 6, le second faisceau secondaire d'entrée H₂ polarisé p parcourt une première fois la boucle de l'interféromètre suivant la direction antihoraire sans changer de polarisation, puis le faisceau H"₂ amplifié une première fois par le second amplificateur optique A2 et par le premier amplificateur optique A1 est transmis par le cube séparateur de polarisation 32 en direction du miroir de Faraday 44. Après réflexion sur le miroir de Faraday 44, le faisceau amplifié H"₂ est réfléchi par le cube séparateur de polarisation 32 vers la boucle optique de l'interféromètre, à nouveau dans le sens anti-horaire mais cette fois polarisé s. Le second faisceau secondaire est alors amplifié une deuxième fois par le second amplificateur optique A2 puis par le premier amplificateur optique A1 suivant le même chemin antihoraire. Lorsque le second faisceau secondaire amplifié quatre fois revient sur le cube séparateur, il est transmis en direction de l'isolateur optique 23.

Le cube séparateur 32 et l'isolateur optique 23 recombinent en polarisation les deux faisceaux secondaires H""₁ et H""₂ de sortie amplifiés chacun par double passage dans les deux amplificateurs optiques A1 et A2. Le dispositif de la figure 5 permet donc de multiplier par deux le nombre de passages du faisceau dans chaque amplificateur. Cette configuration est particulièrement avantageuse pour des amplificateurs optiques A1, A2 à faible gain.

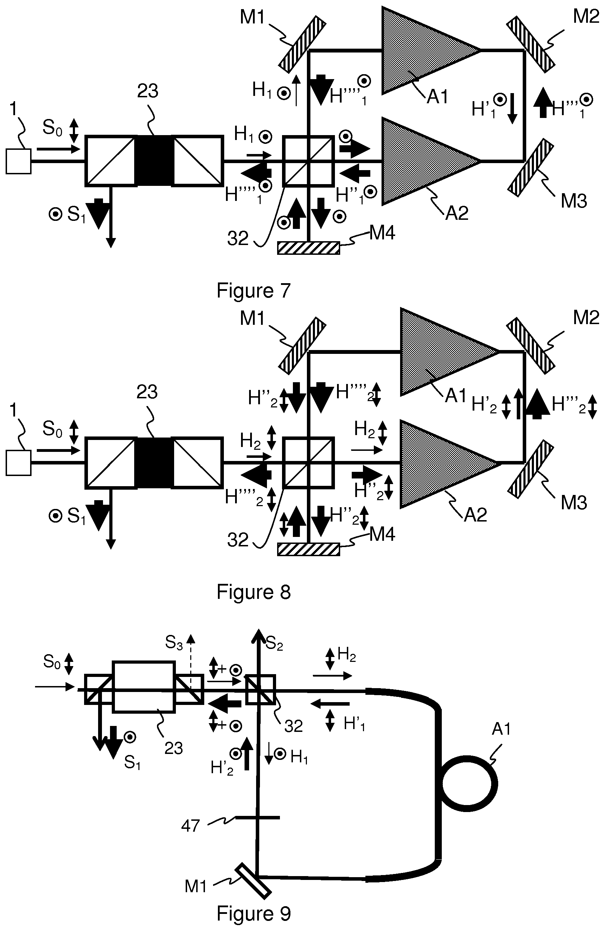

Les figures 7 et 8 représentent schématiquement un dispositif passif de combinaison cohérente de deux faisceaux amplifiés selon une cinquième variante selon l'invention du second mode de réalisation de l'invention. Le dispositif est similaire à celui décrit en lien avec les figures 5 et 6, le miroir de Faraday 44 étant ici remplacé par un miroir M4 fortement réfléchissant qui ne modifie pas la polarisation d'un faisceau lors de la réflexion. Toutefois, dans la figure 7 on observe que le faisceau secondaire parcourt une fois la boucle de l'interféromètre dans le sens horaire, se réfléchit sur le miroir M4, puis parcourt une deuxième fois la boucle de l'interféromètre dans le sens anti-horaire, sans changer de polarisation (cf figure 7). Réciproquement, dans la figure 8 on observe que le faisceau secondaire parcourt une fois la boucle de l'interféromètre dans le sens anti-horaire, se réfléchit sur le miroir M₄, puis parcourt une deuxième fois la boucle de l'interféromètre dans le sens horaire, sans changer de polarisation (cf figure 8). Selon cette cinquième variante, le faisceau secondaire polarisé s est réfléchi quatre fois par le cube séparateur 31. Réciproquement, le faisceau secondaire polarisé p est transmis quatre fois par le cube séparateur 31. Le dispositif des figures 7 et 8 amplifie également quatre fois chaque faisceau secondaire par deux passages dans l'amplificateur A1 et deux passages dans l'amplificateur A2.

La figure 9 représente schématiquement un dispositif passif de combinaison cohérente de deux faisceaux optiques amplifiés suivant un troisième mode de réalisation. Le dispositif de la figure 9 comprend un unique amplificateur à fibre optique bidirectionnel A1 et une lame demi-onde 47 sur le trajet optique de l'interféromètre. Le faisceau d'entrée S₀ est polarisé linéairement, et après traversée de l'isolateur optique 23, les axes de polarisation du faisceau d'entrée sont à 45 degrés des axes propres du séparateur de polarisation 32 à l'entrée de l'interféromètre en anneau. Le séparateur sépare les composantes H₁ polarisée s et H₂ polarisée p. Sur le schéma de la figure 9, la composante H₁ initialement polarisée s parcourt l'interféromètre suivant le sens anti-horaire, tandis que la composante H₂ initialement polarisée p parcourt l'interféromètre suivant le sens horaire. Le faisceau secondaire H₁ traverse la lame demi-onde et devient polarisé p. L'amplificateur A1 reçoit et amplifie le faisceau secondaire H₁ polarisé p se propageant dans le sens anti-horaire et forme un faisceau secondaire amplifié H'₁. Réciproquement, l'amplificateur A1 reçoit et amplifie le faisceau secondaire H₂ polarisé p se propageant dans le sens horaire et forme un faisceau secondaire amplifié H'₂. Le faisceau secondaire amplifié H'₂ traverse la lame demi-onde et devient polarisé s. Le séparateur-combineur de polarisation 32 recombine les deux faisceaux secondaires amplifiés H'₁ polarisé p et H'₂ polarisé s. Si les deux faisceaux secondaires amplifiés H'₁ et H'₂ ont la même amplitude, le faisceau recombiné est polarisé linéairement avec un axe de polarisation à 45 degrés des axes propres du séparateur-combineur de polarisation 32. L'amplificateur A1 est avantageusement un amplificateur à fibre optique pompé de manière co-propagative par une extrémité et pompé de manière contra-propagative par l'autre extrémité. Le double pompage permet de symétriser l'inversion de population, la distribution longitudinale du gain et ainsi les non-linéarités dans l'amplificateur A1 pour les deux directions d'amplification. Toutefois, la recombinaison des deux faisceaux secondaires amplifiés est cohérente, puisqu'ils ont parcouru des trajets optiques réciproques dans l'interféromètre en anneau. Avantageusement, l'amplificateur à fibre optique A1 comprend une fibre optique amplificatrice à maintien de polarisation, dont les axes propres sont alignés par rapport à la polarisation des faisceaux secondaires. Selon une variante du 3^{ème} mode de réalisation, la lame demi-onde est disposée sur le trajet optique des faisceaux secondaires H'₁ et H₂. Selon une autre variante du 3^{ème} mode de réalisation, le dispositif comprend deux lames demi-onde disposées de part et d'autre de l'amplificateur A1. Selon une autre variante du 3^{ème} mode de réalisation, aucune lame d'onde n'est placée sur le chemin optique où elles sont alignées de manière à ne pas changer l'état de polarisation des faisceaux optiques. Ainsi, la polarisation du faisceau secondaire de sortie H^{'}₁ est la même que la polarisation du faisceau secondaire d'entrée H₁. Réciproquement, la polarisation du faisceau secondaire de sortie H^{'}₂ est la même que la polarisation du faisceau secondaire d'entrée H₂. Ainsi, la recombinaison cohérente des faisceaux est réalisée sur la sortie S₂.

Selon une première variante du troisième mode de réalisation, selon l'invention, le dispositif de la figure 9 comprend un miroir M₄ fortement réfléchissant disposé sur le port de sortie du signal S₂, de manière à réfléchir les deux faisceaux secondaires amplifiés une fois par l'amplificateur A1 en direction de l'interféromètre en anneau. De cette manière, chaque faisceau secondaire parcourt à nouveau l'interféromètre en anneau, suivant un trajet inverse à la première boucle, et avec la même polarisation. Cette variante permet d'amplifier deux fois chaque faisceau secondaire par un unique amplificateur A1, avant de recombiner les faisceaux secondaires.

Selon une deuxième variante du troisième mode de réalisation, selon l'invention, le dispositif comprend un miroir de Faraday 44 disposé sur le port de sortie du signal S₂, de manière à réfléchir les deux faisceaux secondaires amplifiés une fois par l'amplificateur A1 en direction de l'interféromètre en anneau. De cette manière, chaque faisceau secondaire parcourt à nouveau l'interféromètre en anneau, suivant un trajet inverse à la première boucle et avec une polarisation orthogonale. Cette variante permet aussi d'amplifier deux fois chaque faisceau secondaire par un unique amplificateur A1, avant de recombiner les faisceaux secondaires.

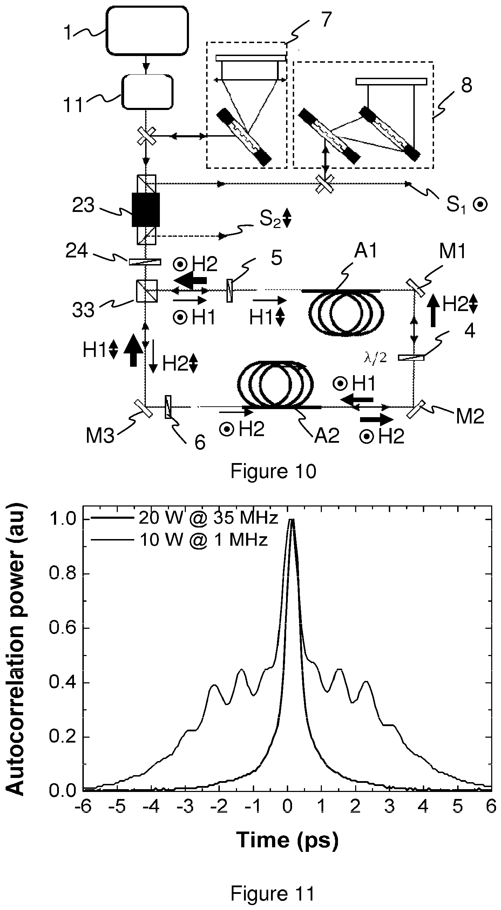

La figure 10 représente un dispositif de combinaison cohérente de deux faisceaux optiques amplifiés suivant un quatrième mode de réalisation. Le dispositif de séparation/recombinaison utilise ici aussi la polarisation des faisceaux. Les amplificateurs A1 et A2 sont des amplificateurs à fibre optique à maintien de polarisation dopés terre rare. Selon un exemple de réalisation chaque amplificateur A1, A2 comprend une section de fibre optique double gaine à coeur dopé Ytterbium de 1.6m de longueur. La source est un oscillateur qui génère des impulsions de 250 fs à un taux de répétition de 35 MHz. L'oscillateur est suivi d'un pulse picker 11 et d'un étireur 7 qui étire temporellement les impulsions jusqu'à 150 ps. Le faisceau incident provenant de l'étireur 7 est couplé à un interféromètre en anneau et le faisceau de sortie S₁ est transmis à un compresseur 8 qui re-comprime temporellement les impulsions amplifiées. Le dispositif comprend un isolateur optique 23, une lame demi-onde 24 et un cube séparateur de polarisation 33. L'isolateur optique 23 permet la recombinaison cohérente des faisceaux amplifiés et l'extraction du faisceau amplifié S₁. L'isolateur 23 permet de projeter les deux polarisations orthogonales à 45 degrés de manière à ce que les faisceaux amplifiés H"₁ et H"₂ interfèrent. La première sortie de l'isolateur 23 rejette la partie non recombinée S₂ du faisceau de sortie. La deuxième sortie de l'isolateur 23 permet d'extraire le faisceau recombiné S₁. Des lames demi-onde, dans l'interféromètre (4, 5 et 6) et en dehors de l'interféromètre (24) sont utilisées pour ajuster finement la répartition de la puissance entre les bras afin d'obtenir le meilleur degré de combinaison cohérente. A chaque instant, le premier amplificateur A1 amplifie le premier faisceau secondaire H₁ se propageant dans le sens horaire de l'interféromètre et le second faisceau secondaire H'₂ amplifié une fois par le second amplificateur A2 qui se propage dans le sens anti-horaire. De même, à chaque instant, le second amplificateur A2 amplifie le second faisceau secondaire H₂ se propageant dans le sens anti-horaire de l'interféromètre et le premier faisceau secondaire H'₁ amplifié une fois le premier amplificateur A1 qui se propage dans le sens horaire. Chaque amplificateur A1, respectivement A2, fonctionne donc comme un préamplificateur pour un faisceau secondaire et comme un amplificateur de puissance pour l'autre faisceau secondaire. Chaque faisceau H₁, H₂ est amplifié dans les deux amplificateurs identiques A1 et A2. Les deux amplificateurs optiques A1, A2 sont configurés de sorte que l'amplification est possible dans chacun des sens de propagation. En sortie, l'entrée d'un amplificateur est injectée dans la sortie de l'autre et vice-versa. Le faisceau H'₁ est donc amplifié une nouvelle fois dans A2, et le faisceau H'₂ est amplifié dans A1, le sens de propagation étant maintenant inversé. Le système étant symétrique, les deux faisceaux se propageant dans des directions opposées ont vu le même chemin optique et le même gain d'amplification. En effet, cet interféromètre est similaire à un interféromètre de Sagnac, à la différence notable qu'il comporte des amplificateurs optiques non linéaires disposés dans la boucle. Les deux faisceaux doublement amplifiés se trouvent donc recombinés sur le séparateur d'entrée-sortie, avec la même phase, le même délai de groupe, le même état de polarisation et le même profil spatial. Ainsi, la quasi-totalité de la puissance est redirigé vers le rotateur de polarisation par le cube séparateur de polarisation 33. En passant dans le rotateur de polarisation l'état de polarisation est modifié de sorte que le faisceau de sortie recombiné S₁ est éjecté par le premier cube séparateur de polarisation. La compensation de dissymétrie apparaissant dans un système expérimental réel peut se faire à de nombreux endroits du système (alignement, pompage des amplificateurs, répartition en puissance des faisceaux secondaires d'entrée etc.).

Pour chaque faisceau secondaire, le pompage est co-propagatif au cours de la première amplification et contra-propagatif pour la seconde amplification. Cette disposition permet de limiter l'intégrale B due à l'automodulation de phase (SPM) et donc de conserver une excellente qualité spatiale de faisceau optique. La longueur du chemin optique pour un tour complet de l'interféromètre est de 5m. Par conséquent, le dispositif est peu sensible aux bruits de phase à des fréquences inférieures à 10MHz, les bruits thermiques et acoustiques étant limités au-delà de 10kHz. La combinaison des faisceaux en sortie de l'interféromètre est ainsi très stable en phase et résistante aux perturbations de l'environnement.

Le dispositif de la figure 10 fonctionne premièrement avec une fréquence de répétition de 35MHz et une puissance du faisceau incident S₀ de 300 mW. Une puissance de pompe de 50W pour chaque amplificateur A1, A2 permet d'obtenir un faisceau de sortie ayant une puissance de 20W avec une efficacité de combinaison de 95%. Le défaut d'efficacité de combinaison est du essentiellement à l'émission spontanée amplifiée, et aux défauts d'alignement. La durée d'impulsion est relativement bien conservée, la durée d'impulsion de sortie étant de 270 fs (FWHM), comme illustré sur la figure 11, qui représente l'autocorrélation pour une impulsion de 20W à une fréquence de répétition de 35 MHz et respectivement pour une impulsion de 10W à une fréquence de répétition de 1 MHz.

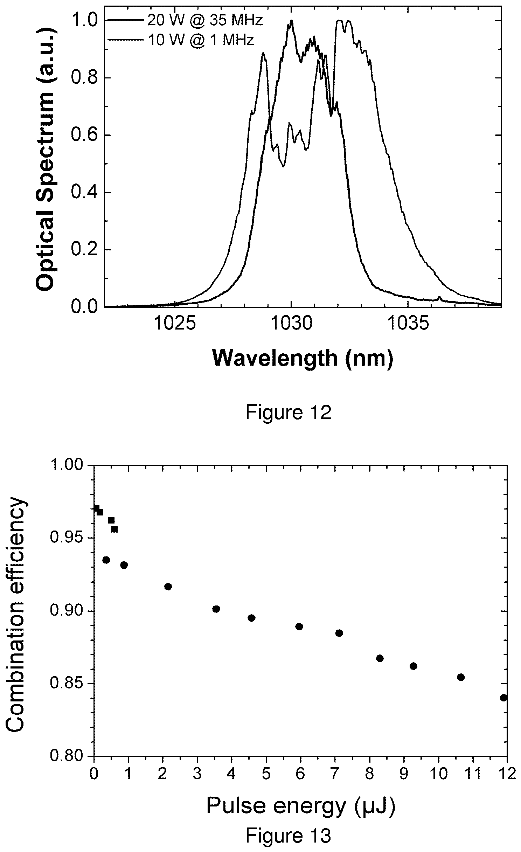

Pour obtenir une puissance crête plus élevée, la fréquence de répétition est fixée à 1 MHz. Cependant, la phase non linéaire accumulée devient non négligeable et doit être identique pour les deux faisceaux contra-propagatifs pour maintenir une bonne efficacité de combinaison. Ceci peut être réalisé en pratique en ajustant la puissance des pompes et les conditions d'injection. En considérant que l'auto-modulation de phase se produit surtout à la sortie d'un amplificateur de puissance, chaque amplificateur A1, A2 contrôle la phase non linéaire d'un seul des deux faisceaux, avec peu d'effets sur l'autre faisceau. Ceci est observé expérimentalement et la tolérance sur la puissance de pompe est d'environ 100mW. La figure 12 montre le spectre optique pour une impulsion de 20 W à une fréquence de répétition de 35 MHz et respectivement pour une impulsion de 10 W à une fréquence de répétition de 1 MHz. A 10 W, l'énergie est d'environ 10 µJ et l'intégrale B sur chaque faisceau de 12 rad. Cette valeur élevée de l'intégrale B déforme complètement l'impulsion (cf. Figures 11 et 12), toutefois l'efficacité de combinaison cohérente reste élevée à 84%.

La figure 13 représente une mesure d'efficacité de combinaison cohérente en fonction de l'énergie d'impulsion pour une fréquence de répétition de 1 MHz et de 35 MHz. On observe une décroissance lente de l'efficacité de combinaison en fonction de l'énergie des impulsions, malgré un ajustement précis des puissances des deux pompes. Cet effet peut notamment provenir de la réinjection mutuelle entre les deux fibres, qui ne sont pas parfaitement symétriques. La propagation non linéaire est affectée par ce paramètre car la phase spectrale relative entre les chemins optiques horaire et anti-horaire présente des termes d'ordres supérieurs qui ne sont pas parfaitement équilibrés.

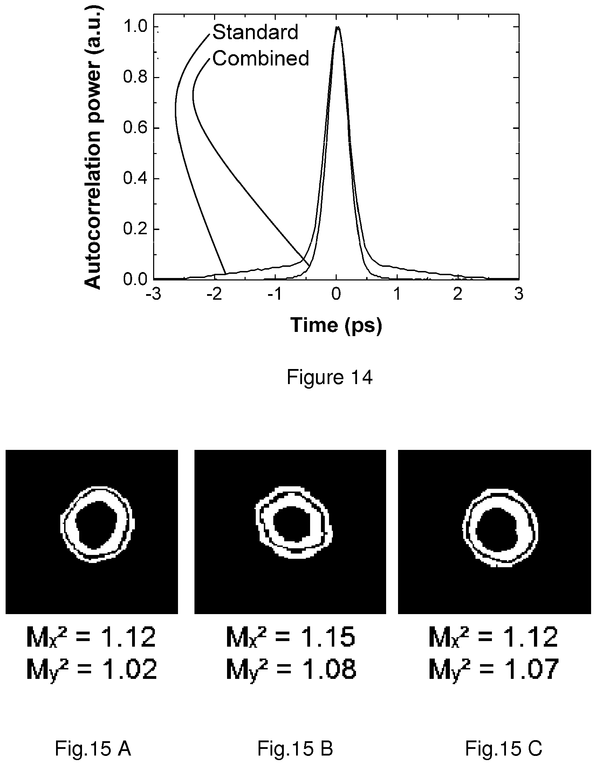

L'architecture d'amplification du dispositif de l'invention offre des avantages comparés à une architecture standard d'amplification à deux étages en insérant un isolateur dans l'interféromètre. La figure 14 représente une mesure d'autocorrélation pour 2W de puissance de sortie à un taux de répétition de 1 MHz dans le dispositif passif de combinaison cohérente de l'invention et dans un dispositif standard d'amplification à deux étages. Le dispositif de l'invention permet de supprimer complètement les distorsions temporelles observées dans la configuration classique. Les fluctuations de puissance mesurées sur le faisceau combiné cohérent sont identiques aux fluctuations de puissance de chaque faisceau considéré isolément. Ceci indique que le bruit de phase joue un rôle négligeable dans la stabilité de la puissance de sortie.

La figure 15 représente les profils de faisceaux obtenus et la valeur des paramètres M² mesurés. Le paramètre M² est un paramètre numérique utilisé pour évaluer la qualité spatiale d'un faisceau laser et dont la valeur idéale est égale à un. La figure 15A représente le profil du premier faisceau secondaire amplifié (H"₁). La figure 15B représente le profil du second faisceau secondaire amplifié (H"₂). La figure 15C représente le profil du faisceau cohérent combiné de sortie (S₁). La qualité de faisceau obtenue est satisfaisante moyennant un alignement et une focalisation soigneuse de l'interféromètre. Cet alignement est crucial pour obtenir une superposition des faisceaux et une efficacité de combinaison élevée.

L'invention propose un système optique pour la combinaison passive cohérente de deux amplificateurs laser indépendants. Le principe de fonctionnement du système est basé sur la division en amplitude du signal d'entrée en deux faisceaux secondaires qui sont tous les deux amplifiés dans les deux amplificateurs dans un ordre inverse et à des instants différents mais jusqu'à un niveau d'énergie et un niveau de phase optique accumulée permettant une efficacité élevée de combinaison cohérente. A la sortie du système les deux faisceaux secondaires amplifiés de manière réciproque sont recombinés de manière cohérente sur le même composant optique ayant permis la division initiale. Le faisceau amplifié cohérent de sortie peut être séparé du signal d'entrée au moyen d'un isolateur optique.

Le dispositif de l'invention a tous les avantages d'un système passif : le dispositif est stable sans requérir de dispositif électronique complexe de mesure de phase et de contre-réaction en temps réel. De plus, disposant maintenant de deux amplificateurs, le dispositif permet de doubler la puissance optique, l'énergie et la puissance crête par rapport à un système à un seul amplificateur, en utilisant des composants optiques classiques. Pour comparaison, dans les dispositifs amplificateurs optiques antérieurs à deux étages d'amplification en série, le second étage d'amplification supporte la puissance crête maximum plus délivrée, ce qui entraîne des effets non linéaires négatifs pour le second amplificateur de puissance. Au contraire, le dispositif de l'invention permet de répartir la puissance amplifiée entre les deux amplificateurs ce qui permet de limiter plus facilement l'accumulation des effets indésirables (effets thermiques et non-linéaires en particulier) dans chaque amplificateur. La puissance totale est recombinée en dehors des deux amplificateurs, via un système passif de recombinaison cohérente. Le dispositif de l'invention permet d'obtenir une efficacité de recombinaison élevée (jusqu'à plus de 95% voire jusque 100%) tout en conservant une excellente qualité spatiale de faisceau optique.

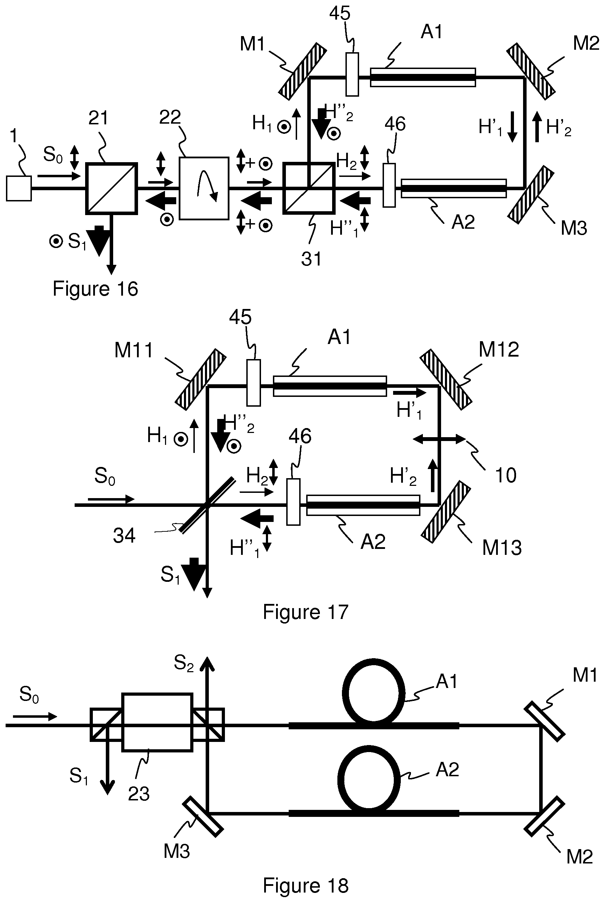

Nous décrivons maintenant en lien avec les figures 16 à 18 une deuxième application de l'invention à un dispositif et un procédé d'élargissement spectral comprenant un système de combinaison cohérente de deux élargisseurs de spectre optiques, chaque élargisseur de spectre optique étant limité en puissance et/ou en énergie et/ou en puissance crête.

La figure 16 représente schématiquement un dispositif passif de combinaison cohérente de deux faisceaux optiques élargis spectralement suivant une première variante du troisième mode de réalisation. Le dispositif de la figure 16 comprend deux fibres optiques à capillaires creux A1 et A2, encore appelés hollow core capillaries fiber. Les fibres optiques à capillaires creux sont utilisées pour étirer spectralement des impulsions laser de forte énergie et/ou de forte puissance. Toutefois, une fibre capillaire est limitée en énergie, l'énergie maximum étant de l'ordre de 10 mJ pour des impulsions de quelques dizaines de fs. Le dispositif de la figure 16 comprend deux fibres capillaires creuses A1 et A2 disposés en série sur le trajet optique d'un interféromètre en anneau. De préférence, on utilise un cube séparateur de polarisation 31 pour séparer le faisceau incident S0 en deux faisceaux secondaires d'entrée H₁ et H₂ polarisés linéairement. L'élargissement dans une fibre capillaire fonctionnant de préférence en polarisation circulaire, on dispose entre le cube séparateur 31 et chaque fibre capillaire A1, A2, une lame quart d'onde 45 respectivement 46. Le premier faisceau secondaire H₁ polarisé linéairement s traverse la première lame quart d'onde 45 et sa polarisation devient circulaire. Le premier faisceau secondaire polarisé circulairement subit un premier élargissement spectral par la première fibre capillaire creuse A1 puis un second élargissement spectral par la seconde fibre capillaire creuse A2. Le premier faisceau secondaire doublement élargi spectralement et toujours polarisé circulairement traverse la second lame quart d'onde 46 et le premier faisceau secondaire de sortie est alors polarisé p. Réciproquement, le second faisceau secondaire H₂ polarisé linéairement p traverse la seconde lame quart d'onde 46 et sa polarisation devient circulaire. Le second faisceau secondaire polarisé circulairement subit un premier élargissement spectral par la seconde fibre capillaire creuse A2 puis un second élargissement spectral par la première fibre capillaire creuse A1. Le second faisceau secondaire doublement élargi spectralement et toujours polarisé circulairement traverse la première lame quart d'onde 45 et le second faisceau secondaire de sortie est alors polarisé s. Le cube séparateur 31 recombine alors les deux faisceaux secondaires de sortie chacun ayant été élargi spectralement deux fois.

La figure 17 représente schématiquement un dispositif passif de combinaison cohérente de deux faisceaux optiques étirés spectralement suivant une deuxième variante du troisième mode de réalisation. Le dispositif de la figure 17 comprend deux fibres capillaires creux A1 et A2 pour élargir spectralement des impulsions laser de forte énergie et/ou puissance. A la place d'un cube séparateur de polarisation, on utilise ici un polariseur en couches minces 34. On utilise également des miroirs M11, M12 et M13 à dérive de fréquence (ou chirped mirrors). Le dispositif de la figure 17 permet d'éliminer l'isolateur optique, qui présente généralement de mauvaises propriétés de phases spectrales. On peut ainsi obtenir en sortie du dispositif de la figure 17 une impulsion de 20 femtosecondes, dont l'énergie par impulsion est supérieure à 20 mJ à une longueur d'onde de 800 nm. Le dispositif des figures 16 ou 17 peut avantageusement comprendre un système d'imagerie (non représenté) constitué par exemple d'un système optique 2f-2f pour former l'image de l'extrémité de la première fibre à capillaire creux A1 sur l'extrémité opposée de la seconde fibre à capillaire creux A2.

La figure 18 représente schématiquement un dispositif de combinaison cohérente de deux faisceaux optiques élargis spectralement suivant une troisième variante du troisième mode de réalisation. Le dispositif de la figure 18 comprend deux fibres optiques (A1, A2) à large mode (large mode area fibre) et s'applique plus particulièrement à l'élargissement spectral d'impulsion laser ultracourtes de faible énergie. Le dispositif de la figure 18 comprend un isolateur optique 23 qui sépare le faisceau d'entrée S₀ en deux faisceaux secondaires polarisés linéairement, respectivement s et p. Les fibres large mode sont de préférence des fibres monomode en silice et fonctionnent en polarisation linéaire. Le dispositif permet de produire un faisceau recombiné cohérent de sortie à une longueur d'onde de 1030 nm, ayant des impulsions de 500fs et dont l'énergie par pulse est supérieure à 2µJ.

Les dispositifs représentés sur les figures 16 à 18 illustrent l'application à l'élargissement spectral d'un faisceau laser, dans laquelle le dispositif permet de distribuer l'énergie et/ou la puissance du faisceau optique entre deux composants optiques disposés sur le trajet d'un interféromètre en anneau pour former un faisceau de sortie ayant une énergie et/ou une puissance supérieure à la limite maximum acceptée par un seul des deux composants optiques.

## Revendications

1. Dispositif passif de combinaison cohérente de deux faisceaux optiques amplifiés et/ou élargis spectralement, ledit dispositif comprenant :
- un interféromètre à division d'amplitude en anneau, ledit interféromètre comprenant :
- des moyens optiques de séparation et de recombinaison (3, 31, 32, 33) disposés de manière à recevoir un faisceau optique incident (S₀) et à le séparer spatialement en un premier faisceau secondaire d'entrée (H₁) et un second faisceau secondaire d'entrée (H₂),
- des moyens optiques de guidage (M₁, M₂, M₃, M₄, M₁₁, M₁₂, M₁₃) disposés de manière à définir un trajet optique en anneau dans ledit interféromètre, ledit premier faisceau secondaire d'entrée (H₁) parcourant l'interféromètre en anneau suivant une direction horaire pour former un premier faisceau secondaire de sortie (H"₁) et respectivement ledit second faisceau secondaire d'entrée (H₂) parcourant l'interféromètre en anneau suivant une direction anti-horaire pour former un second faisceau secondaire de sortie (H"₂) ;
- au moins un composant optique bidirectionnel (A1, A2) disposé sur le trajet optique dudit interféromètre en anneau, ledit au moins un composant optique bidirectionnel (A1, A2) étant apte à amplifier et/ou à élargir spectralement d'une part un faisceau optique secondaire (H₁, H₂) se propageant suivant une direction horaire et d'autre part un faisceau optique secondaire (H₁, H₂) se propageant suivant une direction antihoraire ;
- un miroir réfléchissant (M₄) ou un miroir de Faraday (44) disposé sur une sortie des moyens optiques de séparation et de recombinaison de manière à réfléchir le premier faisceau secondaire de sortie (H"₁) et le second faisceau secondaire de sortie (H"₂) vers l'interféromètre en anneau, lesdits premier faisceau secondaire et second faisceau secondaire parcourant une seconde fois l'interféromètre en anneau et formant un premier faisceau secondaire de sortie amplifié et/ou élargi spectralement deux fois (H""₁) et un second faisceau secondaire de sortie amplifié et/ou élargi spectralement deux fois (H""₂) ;
- lesdits moyens de séparation et de recombinaison (3, 31, 32, 33) étant disposés de manière à recevoir et à recombiner spatialement, temporellement et de manière cohérente ledit premier faisceau secondaire de sortie amplifié et/ou élargi spectralement deux fois (H""₁) et ledit second faisceau secondaire de sortie amplifié et/ou élargi spectralement deux fois (H""₂) pour former un faisceau cohérent de sortie (S₁, S₂, S₃) amplifié et/ou élargi spectralement deux fois.

2. Dispositif passif de combinaison cohérente selon la revendication 1 comprenant en outre des moyens d'isolation optique (2, 21, 22, 23) disposés en amont dudit interféromètre en anneau de manière à séparer spatialement le faisceau optique incident (S₀) et le faisceau cohérent de sortie (S₁, S₂, S₃) amplifié et/ou élargi spectralement deux fois.

3. Dispositif passif de combinaison cohérente selon l'une des revendications 1 à 2, dans lequel lesdits moyens optiques de guidage (M₁, M₂, M₃, M₄, M₁₁, M₁₂, M₁₃) comprennent des miroirs fortement réfléchissants (M₁, M₂, M₃, M₄), des miroirs à dérive de fréquence (M₁₁, M₁₂, M₁₃), des sections de fibres optiques, et/ou des sections de fibres optiques à maintien de polarisation et/ou des sections de fibres optiques à dispersion spécifique.

4. Dispositif passif de combinaison cohérente selon l'une des revendications 1 à 3, dans lequel lesdits moyens optiques de séparation et de recombinaison comprennent un séparateur de polarisation (31, 32, 33) disposé de manière à séparer le faisceau incident (S₀) en un premier faisceau secondaire d'entrée (H₁) et un second faisceau secondaire d'entrée (H₂), lesdits premier et second faisceaux secondaires d'entrée (H₁, H₂) étant polarisés linéairement suivant des polarisations orthogonales, ledit dispositif comprenant en outre des moyens de polarisation (4, 41, 42, 43, 44, 45, 46, 47) disposés sur le trajet de l'interféromètre en anneau, lesdits moyens de polarisation (4, 41, 42, 43, 44, 45, 46, 47) étant configurés de manière à ce que le premier faisceau secondaire de sortie (H"₁) soit polarisé linéairement suivant une même polarisation que le second faisceau secondaire d'entrée (H₂) et de manière à ce que le second faisceau secondaire de sortie (H"₂) soit polarisé linéairement suivant une même polarisation que le premier faisceau secondaire d'entrée (H₁).

5. Dispositif passif de combinaison cohérente selon la revendication 4, dans lequel lesdits moyens de polarisation comprennent une lame demi-onde (4, 47), ou deux lames quart d'onde (45, 46) ou deux lames demi-onde, ou un rotateur de Faraday (42) ou un miroir de Faraday (44), ou un sous-ensemble comprenant un cube séparateur de polarisation (41), une lame quart d'onde (42) et un miroir réfléchissant (43).

6. Dispositif passif de combinaison cohérente selon la revendication 4 ou 5, dans lequel lesdits moyens optiques de séparation et de recombinaison comprennent un polariseur et/ou une lame d'onde (22, 24, 27) et/ou un isolateur optique (23), configurés de manière à recombiner sur un même état de polarisation ledit premier faisceau secondaire de sortie amplifié et/ou élargie spectralement deux fois (H""₁) et ledit second faisceau secondaire de sortie amplifié et/ou élargie spectralement deux fois (H""₂) polarisés orthogonalement l'un par rapport à l'autre.

7. Dispositif passif de combinaison cohérente selon l'une des revendications 1 à 6, dans lequel ledit au moins un composant optique bidirectionnel (A1, A2) comprend un amplificateur optique (A1).

8. Dispositif passif de combinaison cohérente selon l'une des revendications 1 à 6, dans lequel ledit au moins un composant optique bidirectionnel (A1, A2) comprend un premier amplificateur optique bidirectionnel (A1) et un second amplificateur optique bidirectionnel (A2), lesdits amplificateurs optiques (A1, A2) étant disposés en série sur le trajet optique de l'interféromètre en anneau.

9. Dispositif passif de combinaison cohérente selon la revendication 8, dans lequel le premier amplificateur optique (A1) comprend un premier amplificateur à fibre optique et ledit second amplificateur optique (A2) comprend un second amplificateur à fibre optique.

10. Dispositif passif de combinaison cohérente selon l'une des revendications 1 à 6, dans lequel ledit au moins un composant optique bidirectionnel (A1, A2) comprend un premier composant optique bidirectionnel (A1) apte à élargir spectralement lesdits faisceaux optiques secondaires et un second composant optique bidirectionnel (A2) apte à élargir spectralement lesdits faisceaux optiques secondaires.

11. Procédé de combinaison cohérente passive de deux faisceaux optiques amplifiés et/ou élargis spectralement, ledit procédé comprenant les étapes suivantes :
- couplage d'un faisceau optique incident (S₀) à un interféromètre à division d'amplitude en anneau, ledit interféromètre comprenant des moyens optiques de séparation et de recombinaison (3, 31, 32, 33) et au moins un composant optique bidirectionnel (A1, A2) disposé sur le trajet optique dudit interféromètre en anneau, ledit au moins un composant optique (A1, A2) étant apte à amplifier et/ou élargir spectralement d'une part un faisceau optique secondaire se propageant suivant une direction horaire dans l'interféromètre et d'autre part un faisceau optique secondaire se propageant suivant une direction antihoraire dans l'interféromètre,
- séparation spatiale en amplitude du faisceau optique incident (S₀) par lesdits moyens optiques de séparation et de recombinaison (3, 31, 32, 33) en un premier faisceau secondaire d'entrée (H₁) et un second faisceau secondaire d'entrée (H₂),
- guidage optique dudit premier faisceau secondaire d'entrée (H₁) pour parcourir l'interféromètre en anneau suivant une direction horaire et de manière à ce que ledit premier faisceau secondaire d'entrée (H₁) soit amplifié et/ou élargi spectralement par ledit au moins un composant optique (A1, A2) pour former un premier faisceau secondaire de sortie (H"₁) dirigé vers lesdits moyens optiques de séparation et de recombinaison (3, 31, 32, 33) ;
- guidage optique dudit second faisceau secondaire d'entrée (H₂) pour parcourir l'interféromètre en anneau suivant une direction anti-horaire et de manière à ce que ledit second faisceau secondaire d'entrée (H₂) soit amplifié et/ou élargi spectralement par ledit au moins un composant optique (A1, A2) pour former un second faisceau secondaire de sortie (H"₂) dirigé vers lesdits moyens optiques de séparation et de recombinaison (3, 31, 32, 33) ;
- réflexion du premier faisceau secondaire de sortie (H"₁) et du second faisceau secondaire de sortie (H"₂) vers l'interféromètre en anneau, de manière à ce que lesdits premier faisceau secondaire de sortie (H"₁) et second faisceau secondaire de sortie (H"₂) parcourent une seconde fois l'interféromètre en anneau et forment un premier faisceau secondaire de sortie amplifié et/ou élargi spectralement deux fois (H""₁) et un second faisceau secondaire de sortie amplifié et/ou élargi spectralement deux fois (H""₂) ;
- recombinaison spatiale cohérente du premier faisceau secondaire de sortie amplifié et/ou élargi spectralement deux fois (H""₁) et du second faisceau secondaire de sortie amplifié et/ou élargi spectralement deux fois (H""₂) par lesdits moyens optiques de séparation et de recombinaison (3, 31, 32, 33) pour former un faisceau cohérent de sortie (S₁, S₂, S₃) amplifié et/ou élargi spectralement deux fois.

12. Procédé de combinaison cohérente selon la revendication 11, dans lequel :
- la séparation spatiale en amplitude du faisceau optique incident (S₀) en un premier faisceau secondaire d'entrée (H₁) et un second faisceau secondaire d'entrée (H₂) comprend une séparation en polarisation, lesdits premier faisceau secondaire d'entrée (H₁) et second faisceau secondaire d'entrée (H₂) étant polarisés orthogonalement,
- le guidage optique dans l'interféromètre en anneau comprend une rotation de polarisation à 90 degrés, ledit premier faisceau secondaire de sortie (H"₁) ayant la même polarisation que le second faisceau secondaire d'entrée (H₂) et le second faisceau secondaire de sortie (H"₂) ayant la même polarisation que le premier faisceau secondaire d'entrée (H₁),
- la recombinaison spatiale cohérente comprend une recombinaison du premier faisceau secondaire de sortie amplifié et/ou élargi spectralement deux fois (H""₁) et du second faisceau secondaire de sortie amplifié et/ou élargi spectralement deux fois (H""₂), les polarisations du premier faisceau secondaire de sortie amplifié et/ou élargi spectralement deux fois (H""₁) et du second faisceau secondaire de sortie amplifié et/ou élargi spectralement deux fois (H""₂) étant orthogonales.

## Patentansprüche

1. Passive Vorrichtung zur kohärenten Vereinigung von zwei verstärkten und/oder spektral verbreiterten optischen Strahlenbündeln, wobei die Vorrichtung
- ein Ringinterferometer mit Amplitudenteilung aufweiset, wobei das Interferometer
- optische Mittel zum Trennen und zum Wiedervereinigen (3, 31, 32, 33), die so angeordnet sind, daß sie ein einfallendes optisches Strahlenbündel (S₀) empfangen und räumlich in ein erstes sekundäres Eingangsstrahlenbündel (H₁) und ein zweites sekundäres Eingangsstrahlenbündel (H₂) trennen können,
- optische Führungsmittel (M₁, M₂, M₃, M₄, M₁₁, M₁₂, M₁₃), die so angeordnet sind, daß sie im Interferometer einen ringförmigen optischen Weg definieren, wobei das erste sekundäre Eingangsstrahlenbündel (H₁) das Interferometer im Uhrzeigersinn durchläuft, um ein erstes sekundäres Ausgangsstrahlenbündel (H"₁) zu bilden, und das zweite sekundäre Eingangsstrahlenbündel (H₂) das Interferometer gegen den Uhrzeigersinn durchläuft, um ein zweites sekundäres Ausgangsstrahlenbündel (H"₂) zu bilden,
- wenigstens ein bidirektionales optisches Element (A1, A2), das auf dem optischen Weg des Ringinterferometers angeordnet ist, wobei das wenigstens eine bidirektionale optische Element (A1, A2) dazu ausgelegt ist, einerseits ein optisches sekundäres Strahlenbündel, (H₁, H₂), das sich im Uhrzeigersinn ausbreitet, und andererseits ein optisches sekundäres Strahlenbündel (H₁, H₂), das sich entgegen dem Uhrzeigersinn ausbreitet, zu verstärken und/oder spektral zu verbreitern,
- einen reflektierenden Spiegel (M₄) oder einen Faraday-Spiegel (44), der auf einem Ausgang der optischen Mittel zum Trennen und zum Wiedervereinigen angeordnet ist, um das erste sekundäre Ausgangsstrahlenbündel (H"₁) und das zweite sekundäre Ausgangsstrahlenbündel (H"₂) zum Ringinterferometer hin zu reflektieren, wobei das erste sekundäre Strahlenbündel und das zweite sekundäres Strahlenbündel das Ringinterferometer ein zweites Mal durchlaufen und ein zweimal verstärktes und/oder spektral verbreitertes erstes sekundäres Ausgangsstrahlenbündel (H""₁) und ein zweimal verstärktes und/oder spektral verbreitertes zweites sekundäres Ausgangsstrahlenbündel (H""₂) bilden,
- wobei die Mittel zum Trennen und zum Wiedervereinigen (3, 31, 32, 33) so angeordnet sind, daß sie das zweimal verstärkte und/oder spektral verbreiterte erste sekundäre Ausgangsstrahlenbündel (H""₁) und das zweimal verstärkte und/oder spektral verbreiterte zweite sekundäres Ausgangsstrahlenbündel (H""₂) empfangen und räumlich, zeitlich und in kohärenter Weise wiedervereinigen, um ein zweimal verstärktes und/oder spektral verbreitertes kohärentes Ausgangsstrahlenbündel (S₁, S₂, S₃) zu bilden,
aufweiset.

2. Passive Vorrichtung zur kohärenten Vereinigung gemäß Anspruch 1, die außerdem optische Isolationsmittel (2, 21, 22, 23) aufweist, die in Strahlungsrichtung gesehen vor dem Ringinterferometer angeordnet sind, um das einfallende optische Strahlenbündel, (S₀) und das zweimal verstärkte und/oder spektral verbreiterte kohärenten Ausgangsstrahlenbündel (S₁, S₂, S₃) räumlich zu trennen.

3. Passive Vorrichtung zur kohärenten Vereinigung gemäß einem der Ansprüche 1 bis 2, bei der die optischen Führungsmittel (M₁, M₂, M₃, M₄, M₁₁, M₁₂, M₁₃) stark reflektierende Spiegel (M₁, M₂, M₃, M₄), Spiegel mit Frequenzverschiebung (M₁₁, M₁₂, M₁₃), Abschnitte von optischen Fasern und/oder Abschnitte von optischen Fasern mit Beibehaltung der Polarisation und/oder Abschnitte von optischen Fasern mit spezifischer Dispersion aufweisen.

4. Passive Vorrichtung zur kohärenten Vereinigung gemäß einem der Ansprüche 1 bis 3, bei der die Mittel zum Trennen und zum Wiedervereinigen (3, 31, 32, 33) einen Polarisationsteiler (31, 32, 33) aufweisen, der so angeordnet ist, daß das einfallende optische Strahlenbündel (S₀) in ein erstes sekundäres Eingangsstrahlenbündel (H₁) und ein zweites sekundäre Eingangsstrahlenbündel (H₂) getrennt wird, wobei das erste und das zweite sekundäres Eingangsstrahlenbündel (H₁, H₂) zueinander senkrecht linear polarisiert sind, wobei die Vorrichtung außerdem auf dem Weg des Ringinterferometers angeordnete Polarisationsmittel (4, 41, 42, 43, 44, 45, 46, 47) aufweist, wobei die Polarisationsmittel (4, 41, 42, 43, 44, 45, 46, 47) so ausgelegt sind, daß das erste sekundäre Ausgangsstrahlenbündel (H"₁) gemäß derselben Polarisation linear polarisiert ist wie das zweite sekundäre Eingangsstrahlenbündel (H₂) und das zweite sekundäre Ausgangsstrahlenbündel (H"₂) gemäß derselben Polarisation linear polarisiert ist wie das erste sekundäres Eingangsstrahlenbündel (H₁).

5. Passive Vorrichtung zur kohärenten Vereinigung gemäß Anspruch 4, bei der die Polarisationsmittel ein Halbwellenplättchen (4, 47) oder zwei Viertelwellenplättchen (45, 46) oder zwei Halbwellenplättchen oder einen Faraday-Zirkulator (42) oder einen Faraday-Spiegel (44) oder eine Untereinheit aus einem würfelartigen Polarisationsteiler (41), einem Viertelwellenplättchen (42) und einem reflektierenden Spiegel (43) aufweisen.

6. Passive Vorrichtung zur kohärenten Vereinigung gemäß Anspruch 4 oder 5, bei der die optischen Mittel zum Trennen und Wiedervereinigen einen Polarisator und/oder ein Vollwellenplättchen (22, 24, 27) und/oder einen optischen Isolator (23) aufweisen, die so ausgelegt sind, daß das zweimal verstärkte und/oder spektral verbreiterte erste sekundäre Ausgangsstrahlenbündel (H""₁) und das dazu senkrecht polarisierte zweimal verstärkte und/oder spektral verbreiterte zweite sekundäre Ausgangsstrahlenbündel (H""₂) zu einem selben Polarisationszustand wiedervereinigt werden.

7. Passive Vorrichtung zur kohärenten Vereinigung gemäß einem der Ansprüche 1 bis 6, bei der das wenigstens eine bidirektionale Element (A1, A2) einen optischen Verstärker (A1) aufweist.

8. Passive Vorrichtung zur kohärenten Vereinigung gemäß einem der Ansprüche 1 bis 6, bei der das wenigstens eine bidirektionale Element (A1, A2) einen ersten bidirektionalen optischen Verstärker (A1) und einen zweiten bidirektionalen optischen Verstärker (A2) aufweist, wobei die optischen Verstärker (A1, A2) in Reihe auf dem optischen Weg des Ringinterferometers angeordnet sind.

9. Passive Vorrichtung zur kohärenten Vereinigung gemäß Anspruch 8, bei der der erste optische Verstärker (A1) einen ersten Verstärker mit optischen Fasern aufweist und der zweite optische Verstärker (A2) einen zweiten Verstärker mit optischen Fasern aufweist.

10. Passive Vorrichtung zur kohärenten Vereinigung gemäß einem der Ansprüche 1 bis 6, bei der das wenigstens eine bidirektionale Element (A1, A2) ein erstes bidirektionale optisches Element (A1), das dazu ausgelegt ist, die sekundären optischen Strahlenbündel spektral zu verbreitern, und ein zweites optisches Element (A2), das dazu ausgelegt ist, die sekundären optischen Strahlenbündel spektral zu verbreitern.

11. Passives Verfahren zur kohärenten Vereinigung von zwei verstärkten und/oder spektral verbreiterten optischen Strahlenbündeln, wobei das Verfahren die folgenden Schritte aufweist:
- Koppeln eines einfallenden optischen Strahlenbündels (S₀) an ein Ringinterferometer mit Amplitudenteilung, wobei das Interferometer optische Mittel zum Trennen und zum Wiedervereinigen (3, 31, 32, 33) und wenigstens ein auf dem optischen Weg des Ringinterferometers angeordnetes bidirektionales optisches Element (A1, A2) aufweist, wobei das wenigstens eine optische Element (A1, A2) dazu ausgelegt ist, einerseits ein optisches sekundäres Strahlenbündel, das sich im Interferometer im Uhrzeigersinn ausbreitet, und andererseits ein optisches sekundäres Strahlenbündel, das sich im Interferometer entgegen dem Uhrzeigersinn ausbreitet, zu verstärken und/oder spektral zu verbreitern,
- amplitudenmäßiges räumliches Trennen des einfallenden optischen Strahlenbündels (S₀) durch die optische Mittel zum Trennen und zum Wiedervereinigen (3, 31, 32, 33) in ein erstes sekundäres Eingangsstrahlenbündel (H₁) und ein zweites sekundäres Eingangsstrahlenbündel (H₂),
- optisches Führen des ersten sekundären Eingangsstrahlenbündels (H₁), damit dieses das Ringinterferometer im Uhrzeigersinn durchläuft und damit das erste sekundäre Eingangsstrahlenbündel (H₁) durch das wenigstens eine optische Element (A1, A2) verstärkt und/oder spektral verbreitert wird, um ein erstes sekundäres Ausgangsstrahlenbündel (H"₁) zu bilden, das auf die optischen Mittel zum Trennen und zum Wiedervereinigen (3, 31, 32, 33) gerichtet ist,
- optisches Führen des zweiten sekundäre Eingangsstrahlenbündels (H₂), damit dieses das Ringinterferometer gegen den Uhrzeigersinn durchläuft und damit das zweite sekundäre Eingangsstrahlenbündel (H₂) durch das wenigstens eine optische Element (A1, A2) verstärkt und/oder spektral verbreitert wird, um ein zweites sekundäres Ausgangsstrahlenbündel (H"₂) zu bilden, das auf die optischen Mittel zum Trennen und zum Wiedervereinigen (3, 31, 32, 33) gerichtet ist,
- Reflektieren des ersten sekundären Ausgangsstrahlenbündels (H"₁) und des zweiten sekundäre Ausgangsstrahlenbündels (H"₂) zum Ringinterferometer derart, daß das erste sekundäre Ausgangsstrahlenbündel (H"₁) und das zweite sekundäre Ausgangsstrahlenbündel (H"₂) das Ringinterferometer ein zweites Mal durchlaufen und ein zweimal verstärktes und/oder spektral verbreitertes erstes sekundäres Ausgangsstrahlenbündel (H""₁) und ein zweimal verstärktes und/oder spektral verbreitertes zweites sekundäre Ausgangsstrahlenbündel (H""₂) bilden,
- kohärentes räumliches Wiedervereinigen des zweimal verstärkten und/oder spektral verbreiterten ersten sekundären Ausgangsstrahlenbündels (H""₁) und des zweimal verstärkten und/oder spektral verbreiterten zweiten sekundären Ausgangsstrahlenbündels (H""₂) durch die optischen Mittel zum Trennen und zum Wiedervereinigen (3, 31, 32, 33), um ein zweimal verstärktes und/oder spektral verbreitertes kohärentes Ausgangsstrahlenbündel (S₁, S₂, S₃) zu bilden.

12. Passives Verfahren zur kohärenten Vereinigung gemäß Anspruch 11, bei dem
- das amplitudenmäßige räumliche Trennen des einfallenden optischen Strahlenbündels (S₀) in ein erstes sekundäres Eingangsstrahlenbündel (H₁) und ein zweites sekundäres Eingangsstrahlenbündel (H₂) ein polarisationsmäßiges Trennen aufweist, wobei das erste sekundäre Eingangsstrahlenbündel (H₁) und das zweite sekundäre Eingangsstrahlenbündel (H₂) senkrecht zueinander polarisiert sind,
- das optische Führen im Ringinterferometer eine Drehung der Polarisation um 90° aufweist, wobei das erste sekundäre Ausgangsstrahlenbündel (H"₁) dieselbe Polarisation wie das zweite sekundäre Eingangsstrahlenbündel (H₂) und das zweite sekundäre Ausgangsstrahlenbündel (H"₂) dieselbe Polarisation wie das erste sekundäre Eingangsstrahlenbündel (H₁) aufweist,
- die kohärenten räumliche Wiedervereinigung eine Wiedervereinigung des zweimal verstärkten und/oder spektral verbreiterten ersten sekundäre Ausgangsstrahlenbündels (H""₁) und des zweimal verstärkten und/oder spektral verbreiterten zweiten sekundären Ausgangsstrahlenbündels (H""₂) aufweist, wobei die Polarisationen des zweimal verstärkten und/oder spectral verbreiterten ersten sekundären Ausgangsstrahlenbündels (H""₁) und des zweimal verstärkten und/oder spektral verbreiterten zweiten sekundären Ausgangsstrahlenbündels (H""₂) zueinander senkrecht sind.

## Claims

1. A passive device for the coherent combination of two amplified and/or spectrally broadened optical beams, said device comprising:
- an amplitude-division ring interferometer, said interferometer comprising:
- optical splitting and recombination means (3, 31, 32, 33) arranged so as to receive an incident optical beam (S₀) and to spatially split it into a first secondary input beam (H₁) and a second secondary input beam (H₂);
- optical guiding means (M₁, M₂, M₃, M₄, M₁₁, M₁₂, M₁₃) arranged so as to define a ring optical path in said interferometer, said first secondary input beam (H₁) travelling through the ring interferometer in a clockwise direction to form a first secondary output beam (H"₁) and respectively said second secondary input beam (H₂) travelling through the ring interferometer in a counterclockwise direction to form a second secondary output beam(H"₂);
- at least one bidirectional optical component (A1, A2) arranged on the optical path of said ring interferometer, said at least one bidirectional optical component (A1, A2) being adapted to amplify and/or spectrally broaden on the one hand a secondary optical beam (H₁, H₂) propagating in a clockwise direction and on the other hand a secondary optical beam (H₁, H₂) propagating in a counterclockwise direction;
- a reflective mirror (M₄) or a Faraday mirror (44) arranged on an output of the splitting and recombination optical means so as to reflect the first secondary output beam (H"₁) and the second secondary output beam (H"₂) toward the ring interferometer, said first secondary beam and second secondary beam traveling a second time through the ring interferometer and forming a first secondary output beam amplified and/or spectrally broadened two times (H""₁) and a second secondary output beam amplified and/or spectrally broadened two times (H""₂), said splitting and recombination means (3, 31, 32, 33) being arranged so as to receive and to spatially, temporally and coherently recombine said first secondary output beam amplified and/or spectrally broadened two times (H""₁) and said second secondary output beam amplified and/or spectrally broadened two times (H""₂), to form an output coherent beam (S₁, S₂, S₃) amplified and/or spectrally broadened two times.

2. The passive device for coherent combination according to claim 1, further comprising optical isolation means (2, 21, 22, 23) arranged upstream of said ring interferometer so as to spatially split the incident optical beam (S₀) and the output coherent beam (S₁, S₂, S₃) amplified and/or spectrally broadened two times.

3. The passive device for coherent combination according to one of claims 1 to 2, wherein said optical guiding means (M₁, M₂, M₃, M₄, M₁₁, M₁₂, M₁₃) comprise highly reflective mirrors (M₁, M₂, M₃, M₄), chirped mirrors (M₁₁, M₁₂, M₁₃), optical fiber sections, and/or polarization-maintaining optical fiber sections and/or specific dispersion optical fiber sections.

4. The passive device for coherent combination according to one of claims 1 to 3, wherein said splitting and recombination optical means comprise a polarization splitter (31, 32, 33) arranged so as to split the incident beam (S₀) into a first secondary input beam (H₁) and a second secondary input beam (H₂), said first and second secondary input beams (H₁, H₂) being linearly polarized in orthogonal polarizations, said device further comprising polarization means (4, 41, 42, 43, 44, 45, 46, 47) arranged on the path of the ring interferometer, said polarization means (4, 41, 42, 43, 44, 45, 46, 47) being configured so that the first secondary output beam (H"₁) is linearly polarized following a same polarization as the second secondary input beam (H₂) and so that the second secondary output beam (H"₂) is linearly polarized following a same polarization as the first secondary input beam (H₁).

5. The passive device for coherent combination according to claim 4, wherein said polarization means comprise a half-wave plate (4, 47), or two quarter-wave plates (45, 46) or two half-wave plates, or a Faraday rotator (42) or a Faraday mirror (44), or a sub-unit comprising a polarization beamsplitter cube (41), a quarter-wave plate (42) and a reflective mirror (43).

6. The passive device for coherent combination according to claim 4 or 5, wherein said optical splitting and recombination means comprise a polarizer and/or a wave plate (22, 24, 27) and/or an optical isolator (23), configured so as to recombine in a same polarization state said first secondary output beam amplified and/or spectrally broadened two times (H""₁) and said second secondary output beam amplified and/or spectrally broadened two times (H""₂) orthogonally polarized relative to each other.

7. The passive device for coherent combination according to one of claims 1 to 6, wherein said at least one bidirectional optical component (A1, A2) comprises an optical amplifier (A1).

8. The passive device for coherent combination according to one of claims 1 to 6, wherein said at least one bidirectional optical component (A1, A2) comprises a first bidirectional optical amplifier (A1) and a second bidirectional optical amplifier (A2), said optical amplifiers (A1, A2) being arranged in series on the optical path of the ring interferometer.

9. The passive device for coherent combination according to claim 8, wherein the first optical amplifier (A1) comprises a first optical fiber amplifier and said second optical amplifier (A2) comprises a second optical fiber amplifier.

10. The passive device for coherent combination according to one of claims 1 to 6, wherein said at least one bidirectional optical component (A1, A2) comprises a first bidirectional optical component (A1) adapted to spectrally broaden said secondary optical beams and a second bidirectional optical component (A2) adapted to spectrally broaden said secondary optical beams.

11. A method for the passive coherent combination of two amplified and/or spectrally broadened optical beams, said method comprising the following steps:
- coupling an incident optical beam (S₀) to an amplitude-division ring interferometer, said interferometer comprising optical splitting and recombination means (3, 31, 32, 33) and at least one bidirectional optical component (A1, A2) arranged on the optical path of said ring interferometer, said at least one optical component (A1, A2) being adapted to amplify and/or spectrally broaden on the one hand a secondary optical beam propagating in a clockwise direction in the interferometer and on the other hand a secondary optical beam propagating in a counterclockwise direction in the interferometer;
- spatially amplitude-splitting of the incident optical beam (S₀) by said optical splitting and recombination means (3, 31, 32, 33) into a first secondary input beam (H₁) and a second secondary input beam (H₂);
- optically guiding said first secondary input beam (H₁) so that it travels through the ring interferometer in a clockwise direction and so that said first secondary input beam (H₁) is amplified and/or spectrally broadened by said at least one optical component (A1, A2) to form a first secondary output beam (H"₁) directed toward said optical splitting and recombination means (3, 31, 32, 33);
- optically guiding said second secondary input beam (H₂) so that it travels through the ring interferometer in a counterclockwise direction and so that said second secondary input beam (H₂) is amplified and/or spectrally broadened by said at least one optical component (A1, A2) to form a second secondary output beam (H"₂) directed toward said optical splitting and recombination means (3, 31, 32, 33);
- reflection of the first secondary output beam (H"₁) and of the second secondary output beam (H"₂) toward the ring interferometer, so that said first secondary output beam (H"₁) and second secondary output beam (H"₂) travel a second time through the ring interferometer and form a first secondary output beam amplified and/or spectrally broadened two times (H""₁) and a second secondary output beam amplified and/or spectrally broadened two times (H""₂),
- coherent spatial recombination of the first secondary output beam amplified and/or spectrally broadened two times (H""₁) and the second secondary output beam amplified and/or spectrally broadened two times (H""₂) by said optical splitting and recombination means (3, 31, 32, 33) to form an output coherent beam amplified and/or spectrally broadened two times (S₁, S₂, S₃).

12. The method for coherent combination according to claim 11, wherein :
- the spatial amplitude splitting of the incident optical beam (So) into a first secondary input beam (H₁) and a second secondary input beam (H₂) comprises a polarization splitting, said first secondary input beam (H₁) and second secondary input beam (H₂) being polarized orthogonally,
- the optical guiding in the ring interferometer comprises a polarization rotation of 90 degrees, said first secondary output beam (H"₁) having the same polarization as the second secondary input beam (H₂) and the second secondary output beam (H"₂) having the same polarization as the first secondary input beam (H₁),
- the coherent spatial recombination comprises a recombination of the first secondary output beam amplified and/or spectrally broadened two times (H""₁) and of the second secondary output beam amplified and/or spectrally broadened two times (H""₂), the polarizations of the first secondary output beam amplified and/or spectrally broadened two times (H""₁) and of the second secondary output beam amplified and/or spectrally broadened two times (H""₂) being orthogonal.
